(19) Europäisches Patentamt
European Patent Office
Office européen des brevets

(11) **EP 4 757 200 A1**

(12) **EUROPEAN PATENT APPLICATION**
published in accordance with Art. 153(4) EPC

(43) Date of publication:
**10.06.2026 Bulletin 2026/24**

(21) Application number: **24858446.8**

(22) Date of filing: **22.08.2024**

(51) International Patent Classification (IPC):
***H04B 7/06*** (2006.01)

(52) Cooperative Patent Classification (CPC):
**H04B 7/0456; H04B 7/06**

(86) International application number:
**PCT/CN2024/114045**

(87) International publication number:
**WO 2025/044904 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311133878**

(71) Applicant: **HUAWEI TECHNOLOGIES CO., LTD.
Shenzhen 518129 (CN)**

(72) Inventors:
• **GAO, Junhui**
  **Shenzhen, Guangdong 518129 (CN)**
• **YUAN, Yiling**
  **Shenzhen, Guangdong 518129 (CN)**
• **LI, Ting**
  **Shenzhen, Guangdong 518129 (CN)**
• **WANG, Xiaohan**
  **Shenzhen, Guangdong 518129 (CN)**
• **JIN, Huangping**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CHANNEL STATE INFORMATION REPORTING METHOD, AND RELATED APPARATUS**

(57)    This application relates to the field of wireless communication technologies, and in particular, to a channel state information reporting method and a related apparatus. The method includes: receiving a first channel state information reference signal CSI-RS; sending, to a network device, first channel state information CSI obtained based on a measurement result of the first CSI-RS, where the first CSI includes indication information of a first vector set used to determine a target precoding matrix; receiving a second CSI-RS; and sending, to the network device, second CSI obtained based on a measurement result of the second CSI-RS and a second vector set. The second CSI includes a first weighting coefficient corresponding to a universal set or a subset of the second vector set, the second vector set is a universal set or a subset of the first vector set, and the first weighting coefficient and the second vector set are used to determine the target precoding matrix. According to the method provided in this application, overheads of CSI reporting can be effectively reduced, to ensure efficient use of communication resources.

FIG. 4

Processed by Luminess, 75001 PARIS (FR)

**Description**

This application claims priority to Chinese Patent Application No. 202311133878.8, filed with the China National Intellectual Property Administration on August 31, 2023 and entitled "CHANNEL STATE INFORMATION REPORTING METHOD AND RELATED APPARATUS", which is incorporated herein by reference in its entirety.

**TECHNICAL FIELD**

This application relates to the field of wireless communication technologies, and in particular, to a channel state information reporting method and a related apparatus.

**BACKGROUND**

A 5G communication system has higher requirements on aspects such as system capacity and spectral efficiency. In the 5G communication system, application of a massive multiple-antenna technology plays a critical role in improving the spectral efficiency of the system. When a multiple-input multiple-output (multiple-input multiple-output, MIMO) technology is used, before sending data to a terminal device, a network device needs to perform signal precoding on the data. The network device usually needs to determine, based on channel state information (channel state information, CSI) of a downlink channel that is fed back by the terminal device, a downlink channel or a precoding matrix (which may also be referred to as a full channel matrix) used for channel precoding. Specifically, the CSI reported by the terminal device may include a precoding matrix indicator (precoding matrix indicator, PMI). The PMI is determined and reported based on a codebook. The network device may restore, based on the PMI and the codebook, the precoding matrix reported by the terminal device.

To improve PMI feedback precision, PMI reporting based on a codebook of statistical eigen subspaces is proposed. In the codebook, statistical eigen subspace bases and a corresponding linear combination coefficient are used to represent a downlink channel or a precoding matrix. The codebook may be similar to a 3rd generation partnership project (3rd generation partnership project, 3GPP) R16 Type II (Type II) codebook, and is represented in a form of a bilinear combination using one group of statistical eigen subspace bases in space domain and one group of statistical eigen subspace bases in frequency domain. Alternatively, the codebook may be a space-frequency joint codebook, and a linear combination of one group of space-frequency joint eigen subspace bases is used for representation. In an existing CSI reporting solution used for precoding matrix reporting, basis indication information indicating one or more statistical eigen subspace bases selected by the terminal device and a corresponding linear combination coefficient are both completed in one time of CSI reporting. However, a data volume of the basis indication information of the statistical eigen subspace bases is large. Consequently, overheads of the existing CSI reporting solution used for precoding matrix reporting are high. This is not conducive to efficient use of communication resources.

**SUMMARY**

To resolve the foregoing problem, this application provides a channel state information reporting method and a related apparatus, to reduce CSI reporting overheads and facilitate efficient use of communication resources.

The following describes this application from a plurality of aspects. It is easy to understand that implementations of the following plurality of aspects may be mutually referenced.

According to a first aspect, an embodiment of this application provides a channel state information reporting method. The method is applicable to a terminal device. The method includes: receiving a first channel state information reference signal CSI-RS from a network device; sending first channel state information CSI to the network device, where the first CSI is obtained based on a measurement result of the first CSI-RS, the first CSI includes indication information of a first vector set used to determine a target precoding matrix, and the first vector set includes a space domain vector set and/or a frequency domain vector set, or includes a space-frequency joint vector set; and receiving a second CSI-RS sent by the network device, where the second CSI is obtained based on a measurement result of the second CSI-RS and a second vector set, the second CSI includes a first weighting coefficient corresponding to the second vector set or a subset of the second vector set, the second vector set is the first vector set or a subset of the first vector set, and the first weighting coefficient and the second vector set are used to determine the target precoding matrix.

In the foregoing implementation, the indication information of the first vector set used to determine the target precoding matrix is reported through the first CSI, and the first weighting coefficient used to determine the target precoding matrix is reported through the second CSI that is independent of the first CSI. The indication information and the weighting coefficient that correspond to the precoding matrix are reported independently. This can effectively resolve an existing problem of high overheads of CSI reporting for reporting a precoding matrix or a downlink channel, and facilitates efficient use of communication resources of a communication system.

With reference to the first aspect, in a possible implementation, when CSI reporting types corresponding to first CSI reporting for reporting the first CSI and second CSI reporting for reporting the second CSI are periodic or semi-persistent, a CSI reporting periodicity corresponding to the first CSI reporting is greater than a CSI reporting periodicity corresponding to the second CSI reporting.

The first CSI reports the indication information of the first vector set, the first vector set describes a statistical feature of a channel in a domain (for example, a space domain, a frequency domain, or a space-frequency joint domain), and the first CSI changes slowly. Therefore, the first CSI does not need to be frequently reported. Therefore, in the foregoing implementation, the CSI reporting periodicity corresponding to the first CSI reporting is set to be longer, so that a quantity of times of first CSI reporting can be reduced, to save communication resources.

With reference to the first aspect, in a possible implementation, when the CSI reporting types corresponding to the first CSI reporting and the second CSI reporting are both aperiodic, a CSI reporting interval corresponding to the first CSI reporting may be greater than a CSI reporting interval corresponding to the second CSI reporting.

The first CSI reports the indication information of the first vector set, the first vector set describes a statistical feature of a channel in a domain (for example, a space domain, a frequency domain, or a space-frequency joint domain), and the first CSI changes slowly. Therefore, the first CSI does not need to be frequently reported. Therefore, in the foregoing implementation, the CSI reporting interval corresponding to the first CSI reporting is set to be longer, so that a quantity of times of first CSI reporting can be reduced, to save communication resources.

With reference to the first aspect, in a possible implementation, a CSI-RS corresponding to the first CSI reporting and a CSI-RS corresponding to the second CSI reporting have a same quasi-co-location relationship, or the CSI-RS corresponding to the second CSI reporting is quasi-co-located with the CSI-RS corresponding to the first CSI reporting.

With reference to the first aspect, in a possible implementation, the first CSI reporting and the second CSI reporting may further satisfy at least one of the following: reporting content corresponding to the first CSI reporting is different from that corresponding to the second CSI reporting; the CSI reporting types corresponding to the first CSI reporting and the second CSI reporting are the same or different; when the CSI reporting types corresponding to the first CSI reporting and the second CSI reporting are periodic or semi-persistent, reporting periodicities corresponding to the first CSI reporting and the second CSI reporting are different, and start offsets of the reporting periodicities corresponding to the first CSI reporting and the second CSI reporting may be different or the same; CSI-RS resource types corresponding to the first CSI reporting and the second CSI reporting are the same or different; when the CSI-RS resource types corresponding to the first CSI reporting and the second CSI reporting are periodic or semi-persistent, a periodicity of a CSI-RS resource corresponding to the first CSI reporting is the same as or different from a periodicity of a CSI-RS resource corresponding to the second CSI reporting, and a start offset of the periodicity of the CSI-RS resource corresponding to the first CSI reporting is the same as or different from a start offset of the periodicity of the CSI-RS resource corresponding to the second CSI reporting; quantities of CSI-RS resources corresponding to the first CSI reporting and the second CSI reporting are the same or different; and CSI-RS resource mapping corresponding to the first CSI reporting is the same as or different from that corresponding to the second CSI reporting.

In the foregoing implementation, some configuration items corresponding to the first CSI reporting may be the same as or different from those corresponding to the second CSI reporting. In this way, it can be ensured that two pieces of CSI reporting and CSI resource configurations can be more flexible, and applicability and practicability of the channel state information reporting method provided in this application can be improved.

With reference to the first aspect, in a possible implementation, the method further includes: receiving first configuration information from the network device. The first configuration information includes first CSI reporting configuration information and second CSI reporting configuration information associated with the first CSI reporting configuration information. The first CSI reporting configuration information corresponds to a first reporting configuration ID, the second reporting configuration corresponds to a second reporting configuration ID, and the first reporting configuration ID is different from the second reporting configuration ID. The first CSI reporting configuration information and the second reporting configuration are respectively used to configure the first CSI reporting and the second CSI reporting.

In the foregoing implementation, the first CSI reporting and the second CSI reporting are indicated or configured for the terminal device by using two pieces of different and associated CSI reporting configuration information. The method is simple and easy to implement, and can reduce implementation difficulty of the channel state information reporting method provided in this application.

With reference to the first aspect, in a possible implementation, the first CSI reporting configuration information includes an association identifier indicating the second reporting configuration ID, and the second CSI reporting configuration information includes an association identifier indicating the first reporting configuration ID. Alternatively, the second CSI reporting configuration information includes an association identifier indicating the first reporting configuration ID.

With reference to the first aspect, in a possible implementation, when the CSI reporting types corresponding to the first CSI reporting and the second CSI reporting are both semi-persistent, a semi-persistent CSI trigger state list includes a first semi-persistent CSI trigger state corresponding to the first CSI reporting configuration information and a second semi-persistent trigger state corresponding to the second CSI reporting configuration information. When the CSI reporting types corresponding to the first CSI reporting and the second CSI reporting are both aperiodic, an aperiodic CSI trigger state list includes a first aperiodic CSI trigger state corresponding to the first CSI reporting configuration information and a second aperiodic trigger state corresponding to the second CSI reporting configuration information. When the CSI reporting type corresponding to the first CSI reporting is semi-persistent and the CSI reporting type corresponding to the second CSI reporting is aperiodic, a semi-persistent CSI trigger state list includes a first semi-persistent CSI trigger state corresponding to the first CSI reporting configuration information, and an aperiodic CSI trigger state list includes a second aperiodic trigger state corresponding to the second CSI reporting configuration information. When the CSI reporting type corresponding to the first CSI reporting is aperiodic and the CSI reporting type corresponding to the second CSI reporting is semi-persistent, a semi-persistent CSI trigger state list includes a second semi-persistent CSI trigger state corresponding to the second CSI reporting configuration information, and an aperiodic CSI trigger state list includes a first aperiodic trigger state corresponding to the first CSI reporting configuration information. The first semi-persistent CSI trigger state and the first aperiodic CSI trigger state are associated with the first reporting configuration ID, and the second semi-persistent CSI trigger state and the second aperiodic CSI trigger state are associated with the second reporting configuration ID.

With reference to the first aspect, in a possible implementation, the method further includes: receiving configuration information sent by the network device. The second configuration information includes first CSI sub-reporting configuration information and second CSI sub-reporting configuration information, and the first CSI sub-reporting configuration information and the second CSI sub-reporting configuration information are respectively used to configure the first CSI reporting and the second CSI reporting.

In the foregoing implementation, the first CSI reporting and the second CSI reporting are indicated or configured for the terminal device by using one piece of CSI reporting configuration information, so that communication resources of a communication system can be saved.

With reference to the first aspect, in a possible implementation, when the CSI reporting types corresponding to the first CSI reporting and the second CSI reporting are both aperiodic, an aperiodic CSI trigger state list includes a first aperiodic CSI trigger state corresponding to the first CSI sub-reporting configuration information and a second aperiodic CSI trigger state corresponding to the second CSI sub-reporting configuration information. When the CSI reporting types corresponding to the first CSI reporting and the second CSI reporting are both semi-persistent, a semi-persistent CSI trigger state list includes a first semi-persistent CSI trigger state corresponding to the first CSI sub-reporting configuration information and a second semi-persistent CSI trigger state corresponding to the second CSI sub-reporting configuration information. A third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

With reference to the first aspect, in a possible implementation, when the CSI reporting types corresponding to the first CSI reporting and the second CSI reporting are both aperiodic, an aperiodic CSI trigger state list includes a target aperiodic CSI trigger state corresponding to the second configuration information. When the CSI reporting types corresponding to the first CSI reporting and the second CSI reporting are both semi-persistent, a semi-persistent CSI trigger state list includes a target semi-persistent CSI trigger state corresponding to the second configuration information. The target aperiodic CSI trigger state and the target semi-persistent trigger state are both associated with a third reporting configuration ID, and the third reporting configuration ID is a reporting configuration ID corresponding to the second configuration information.

With reference to the first aspect, in a possible implementation, when a reporting trigger message received by the terminal device indicates to trigger the target aperiodic CSI trigger state and includes identification information indicating the first CSI reporting, or when the reporting trigger message received by the terminal device indicates indication information for triggering the target semi-persistent CSI trigger state and includes the identification information indicating the first CSI reporting, the reporting trigger message is used to trigger the first CSI reporting. When a reporting trigger message received by the terminal device indicates to trigger the target aperiodic CSI trigger state and includes identification information indicating the second CSI reporting, or when the reporting trigger message received by the terminal device indicates indication information for triggering the target semi-persistent CSI trigger state and includes the identification information indicating the second CSI reporting, the reporting trigger message is used to trigger the second CSI reporting.

With reference to the first aspect, in a possible implementation, when the reporting type of the first CSI reporting is semi-persistent and the reporting type of the second CSI reporting is aperiodic, a semi-persistent CSI trigger state list includes a first semi-persistent CSI trigger state corresponding to the first CSI sub-reporting configuration information, and an aperiodic CSI trigger state list includes a second aperiodic CSI trigger state corresponding to the second CSI sub-reporting configuration information. When the reporting type of the first CSI reporting is aperiodic and the reporting type of the second CSI reporting is semi-persistent, a semi-persistent CSI trigger state list includes a second semi-persistent CSI trigger state corresponding to the second CSI sub-reporting configuration information, and an aperiodic CSI trigger state list includes a first aperiodic CSI trigger state corresponding to the first CSI sub-reporting configuration information. The first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

With reference to the first aspect, in a possible implementation, when the reporting trigger message received by the terminal device indicates to trigger the first aperiodic CSI trigger state or the first semi-persistent CSI trigger state, the reporting trigger message is used to trigger the first CSI reporting. When the reporting trigger message received by the terminal device indicates to trigger the second aperiodic CSI trigger state or the second semi-persistent CSI trigger state, the reporting trigger message is used to trigger the second CSI reporting.

With reference to the first aspect, in a possible implementation, the method further includes: when a time-frequency resource of the first CSI-RS partially or completely overlaps a time-frequency resource of the second CSI-RS, determining the measurement result of the first CSI-RS as a measurement result of the second CSI-RS.

With reference to the first aspect, in a possible implementation, the first CSI corresponds to one time of target first CSI reporting completed by the terminal device before a reporting moment of the second CSI. The target first CSI reporting is effective CSI reporting, and the second vector set is a universal set of the first vector set. A reporting moment of the first CSI is closest to the reporting moment of the second CSI, and an interval between the reporting moments is greater than first duration.

With reference to the first aspect, in a possible implementation, the first CSI corresponds to N1 consecutive times of CSI reporting completed by the terminal device before a reporting moment of the second CSI. The N1 consecutive times of CSI reporting correspond to one time of complete first CSI reporting. The second vector set is a universal set of the first vector set. The N1 times of CSI reporting are all effective CSI reporting, a CSI reporting moment corresponding to a last time of CSI reporting completed in the N1 times of CSI reporting is closest to the reporting moment of the second CSI, and an interval between the reporting moments is greater than first duration. N1 is a positive integer greater than or equal to 2.

With reference to the first aspect, in a possible implementation, the first CSI corresponds to N1 consecutive times of CSI reporting of the terminal device, and the N1 consecutive times of CSI reporting correspond to one time of complete first CSI reporting. The second vector set is the subset of the first vector set. Indication information included in N2 pieces of target CSI corresponding to N2 times of target CSI reporting in the N1 times of CSI reporting indicates the second vector set. The N2 times of target CSI reporting are all effective CSI reporting. Reporting moments corresponding to the N2 times of target CSI reporting are all before a reporting moment of the second CSI, a CSI reporting moment corresponding to a last time of target CSI reporting completed in the N2 times of target CSI reporting is closest to the reporting moment of the second CSI, and an interval between the reporting moments is greater than first duration. N1 is a positive integer greater than or equal to 2, and N2 is a positive integer less than N1.

With reference to the first aspect, in a possible implementation, the effective CSI reporting is CSI reporting in which the terminal device completes reporting and receives corresponding data new transmission indication information sent by the network device, or the effective CSI reporting is CSI reporting in which the terminal device does not receive, within second duration after completing reporting, the corresponding data retransmission indication information sent by the network device.

With reference to the first aspect, in a possible implementation, the first duration is an interval between a first moment and the reporting moment of the second CSI, and the first moment is a moment corresponding to a reference resource of the second CSI reporting corresponding to the second CSI. Alternatively, the first duration is an interval between a second moment and the reporting moment of the second CSI, the second moment is a moment corresponding to a CSI-RS corresponding to one time of second CSI reporting that is closest to a first moment, the second moment is before the first moment, and the first moment is a moment corresponding to a reference resource of the second CSI reporting corresponding to the second CSI.

With reference to the first aspect, in a possible implementation, the first vector set includes the space-frequency joint vector set, the indication information of the first vector set indicates a first basis vector set and a second weighting coefficient corresponding to the first basis vector set, and the first basis vector set and the second weighting coefficient are used to determine the space-frequency joint vector set.

With reference to the first aspect, in a possible implementation, the first vector set includes the space domain vector set and the frequency domain vector set, and the indication information of the first vector set indicates a second basis vector set, a third weighting coefficient corresponding to the second basis vector set, a third basis vector set, and a fourth weighting coefficient corresponding to the third basis vector set. The second basis vector set and the third weighting coefficient are used to determine the space domain vector set, and the third basis vector set and the fourth weighting coefficient are used to determine the frequency domain vector set.

With reference to the first aspect, in a possible implementation, the first vector set includes the space domain vector set, the indication information of the first vector set indicates a second basis vector set and a third weighting coefficient corresponding to the second basis vector set, and the second basis vector set and the third weighting coefficient are used to determine the space domain vector set.

With reference to the first aspect, in a possible implementation, the second CSI further includes indication information of a fourth basis vector set, the fourth basis vector set represents the frequency domain vector set, and the first vector set includes the space domain vector set and the frequency domain vector set represented by the fourth basis vector set.

With reference to the first aspect, in a possible implementation, the first vector set includes the frequency domain vector set, the indication information of the first vector set indicates a third basis vector set and a fourth weighting coefficient corresponding to the third basis vector set, and the third basis vector set and the fourth weighting coefficient are used to determine the frequency domain vector set.

With reference to the first aspect, in a possible implementation, the second CSI further includes indication information of a fifth basis vector set, the fifth basis vector set represents the space domain vector set, and the first vector set includes the frequency domain vector set and space domain vector set the represented by the fifth basis vector set.

With reference to the first aspect, in a possible implementation, when the second CSI includes the first weighting coefficient corresponding to the subset of the second vector set, the second CSI further includes indication information indicating the subset of the second vector set in the second vector set.

According to a second aspect, an embodiment of this application provides a channel state information reporting method. The method is applicable to a network device. The method includes: sending a first channel state information reference signal CSI-RS to a terminal device; receiving first CSI from the terminal device, where the first CSI is obtained by the terminal device based on a measurement result of the first CSI-RS, the first CSI includes indication information of a first vector set used to determine a target precoding matrix, and the first vector set includes at least one of a space domain vector set and a frequency domain vector set, or includes a space-frequency joint vector set; sending a second CSI-RS to the terminal device; and receiving second CSI from the terminal device, where the second CSI is obtained by the terminal device based on a measurement result of the second CSI-RS and a second vector set, the second CSI includes a first weighting coefficient corresponding to the second vector set or a subset of the second vector set, the second vector set is the first vector set or a subset of the first vector set, and the first weighting coefficient and the second vector set are used to determine the target precoding matrix.

With reference to the second aspect, in a possible implementation, when CSI reporting types corresponding to first CSI reporting for reporting the first CSI and second CSI reporting for reporting the second CSI are periodic or semi-persistent, a CSI reporting periodicity corresponding to the first CSI reporting is greater than a CSI reporting periodicity corresponding to the second CSI reporting.

With reference to the second aspect, in a possible implementation, when the CSI reporting types corresponding to the first CSI reporting and the second CSI reporting are both aperiodic, a CSI reporting interval corresponding to the first CSI reporting may be greater than a CSI reporting interval corresponding to the second CSI reporting.

With reference to the second aspect, in a possible implementation, a CSI-RS corresponding to the first CSI reporting and a CSI-RS corresponding to the second CSI reporting have a same quasi-co-location relationship, or the CSI-RS corresponding to the second CSI reporting is quasi-co-located with the CSI-RS corresponding to the first CSI reporting.

With reference to the second aspect, in a possible implementation, the first CSI reporting and the second CSI reporting may further satisfy at least one of the following: reporting content corresponding to the first CSI reporting is different from that corresponding to the second CSI reporting; the CSI reporting types corresponding to the first CSI reporting and the second CSI reporting are the same or different; when the CSI reporting types corresponding to the first CSI reporting and the second CSI reporting are periodic or semi-persistent, reporting periodicities corresponding to the first CSI reporting and the second CSI reporting are different, and start offsets of the reporting periodicities corresponding to the first CSI reporting and the second CSI reporting may be different or the same; CSI-RS resource types corresponding to the first CSI reporting and the second CSI reporting are the same or different; when the CSI-RS resource types corresponding to the first CSI reporting and the second CSI reporting are periodic or semi-persistent, a periodicity of a CSI-RS resource corresponding to the first CSI reporting is the same as or different from a periodicity of a CSI-RS resource corresponding to the second CSI reporting, and a start offset of the periodicity of the CSI-RS resource corresponding to the first CSI reporting is the same as or different from a start offset of the periodicity of the CSI-RS resource corresponding to the second CSI reporting; quantities of CSI-RS resources corresponding to the first CSI reporting and the second CSI reporting are the same or different; and CSI-RS resource mapping corresponding to the first CSI reporting is the same as or different from that corresponding to the second CSI reporting.

With reference to the second aspect, in a possible implementation, the method further includes: sending first configuration information to the terminal device. The first configuration information includes first CSI reporting configuration information and second CSI reporting configuration information associated with the first CSI reporting configuration information, the first CSI reporting configuration information corresponds to a first reporting configuration ID, the second reporting configuration corresponds to a second reporting configuration ID, the first reporting configuration ID is different from the second reporting configuration ID, and the first CSI reporting configuration information and the second CSI reporting configuration information are respectively used to configure the first CSI reporting and the second CSI reporting.

With reference to the second aspect, in a possible implementation, the first CSI reporting configuration information includes an association identifier indicating the second reporting configuration ID, and the second CSI reporting configuration information includes an association identifier indicating the first reporting configuration ID. Alternatively, the second CSI reporting configuration information includes an association identifier indicating the first reporting configuration ID.

With reference to the second aspect, in a possible implementation, when the CSI reporting types corresponding to the first CSI reporting and the second CSI reporting are both semi-persistent, a semi-persistent CSI trigger state list includes a first semi-persistent CSI trigger state corresponding to the first CSI reporting configuration information and a second semi-persistent trigger state corresponding to the second CSI reporting configuration information. When the CSI reporting types corresponding to the first CSI reporting and the second CSI reporting are both aperiodic, an aperiodic CSI trigger state list includes a first aperiodic CSI trigger state corresponding to the first CSI reporting configuration information and a second aperiodic trigger state corresponding to the second CSI reporting configuration information. When the CSI reporting type corresponding to the first CSI reporting is semi-persistent and the CSI reporting type corresponding to the second CSI reporting is aperiodic, a semi-persistent CSI trigger state list includes a first semi-persistent CSI trigger state corresponding to the first CSI reporting configuration information, and an aperiodic CSI trigger state list includes a second aperiodic trigger state corresponding to the second CSI reporting configuration information. When the CSI reporting type corresponding to the first CSI reporting is aperiodic and the CSI reporting type corresponding to the second CSI reporting is semi-persistent, a semi-persistent CSI trigger state list includes a second semi-persistent CSI trigger state corresponding to the second CSI reporting configuration information, and an aperiodic CSI trigger state list includes a first aperiodic trigger state corresponding to the first CSI reporting configuration information. The first semi-persistent CSI trigger state and the first aperiodic CSI trigger state are associated with the first reporting configuration ID, and the second semi-persistent CSI trigger state and the second aperiodic CSI trigger state are associated with the second reporting configuration ID.

With reference to the second aspect, in a possible implementation, the method further includes: sending second configuration information to the terminal device. The second configuration information includes first CSI sub-reporting configuration information and second CSI sub-reporting configuration information, and the first CSI sub-reporting configuration information and the second CSI sub-reporting configuration information are respectively used to configure the first CSI reporting and the second CSI reporting.

With reference to the second aspect, in a possible implementation, when the CSI reporting types corresponding to the first CSI reporting and the second CSI reporting are both aperiodic, an aperiodic CSI trigger state list includes a first aperiodic CSI trigger state corresponding to the first CSI sub-reporting configuration information and a second aperiodic CSI trigger state corresponding to the second CSI sub-reporting configuration information. When the CSI reporting types corresponding to the first CSI reporting and the second CSI reporting are both semi-persistent, a semi-persistent CSI trigger state list includes a first semi-persistent CSI trigger state corresponding to the first CSI sub-reporting configuration information and a second semi-persistent CSI trigger state corresponding to the second CSI sub-reporting configuration information. A third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

With reference to the second aspect, in a possible implementation, when the CSI reporting types corresponding to the first CSI reporting and the second CSI reporting are both aperiodic, an aperiodic CSI trigger state list includes a target aperiodic CSI trigger state corresponding to the second configuration information. When the CSI reporting types corresponding to the first CSI reporting and the second CSI reporting are both semi-persistent, a semi-persistent CSI trigger state list includes a target semi-persistent CSI trigger state corresponding to the second configuration information. The target aperiodic CSI trigger state and the target semi-persistent trigger state are both associated with a third reporting configuration ID, and the third reporting configuration ID is a reporting configuration ID corresponding to the second configuration information.

With reference to the second aspect, in a possible implementation, when a reporting trigger message sent by the network device indicates to trigger the target aperiodic CSI trigger state and includes identification information indicating the first CSI reporting, or when the reporting trigger message sent by the network device indicates to trigger the target semi-persistent CSI trigger state and includes the identification information indicating the first CSI reporting, the reporting trigger message is used to trigger the first CSI reporting. When a reporting trigger message sent by the network device indicates to trigger the target aperiodic CSI trigger state and includes identification information indicating the second CSI reporting, or when the reporting trigger message sent by the network device indicates to trigger the target semi-persistent CSI trigger state and includes the identification information indicating the second CSI reporting, the reporting trigger message is used to trigger the second CSI reporting.

With reference to the first aspect, in a possible implementation, when the reporting type of the first CSI reporting is semi-persistent and the reporting type of the second CSI reporting is aperiodic, a semi-persistent CSI trigger state list includes a first semi-persistent CSI trigger state corresponding to the first CSI sub-reporting configuration information, and an aperiodic CSI trigger state list includes a second aperiodic CSI trigger state corresponding to the second CSI sub-reporting configuration information. When the reporting type of the first CSI reporting is aperiodic and the reporting type of the second CSI reporting is semi-persistent, a semi-persistent CSI trigger state list includes a second semi-persistent CSI trigger state corresponding to the second CSI sub-reporting configuration information, and an aperiodic CSI trigger state list includes a first aperiodic CSI trigger state corresponding to the first CSI sub-reporting configuration information. The first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

With reference to the second aspect, in a possible implementation, when the reporting trigger message sent by the network device indicates to trigger the first aperiodic CSI trigger state or the first semi-persistent CSI trigger state, the reporting trigger message is used to trigger the first CSI reporting. When the reporting trigger message sent by the network device indicates to trigger the second aperiodic CSI trigger state or the second semi-persistent CSI trigger state, the reporting trigger message is used to trigger the second CSI reporting.

With reference to the second aspect, in a possible implementation, the first CSI corresponds to one time of target first CSI reporting completed by the terminal device before a reporting moment of the second CSI, the target first CSI reporting is effective CSI reporting, the second vector set is a universal set of the first vector set, a reporting moment of the first CSI is closest to the reporting moment of the second CSI, and an interval between the reporting moments is greater than first duration.

With reference to the second aspect, in a possible implementation, the first CSI corresponds to N1 consecutive times of CSI reporting completed by the terminal device before a reporting moment of the second CSI, the N1 consecutive times of CSI reporting correspond to one time of complete first CSI reporting, the second vector set is a universal set of the first vector set, the N1 times of CSI reporting are all effective CSI reporting, a CSI reporting moment corresponding to a last time of CSI reporting completed in the N1 times of CSI reporting is closest to the reporting moment of the second CSI, an interval between the reporting moments is greater than first duration, and N1 is a positive integer greater than or equal to 2.

With reference to the second aspect, in a possible implementation, indication information included in the first CSI indicates all vectors included in the first vector set. The first CSI corresponds to N1 consecutive times of CSI reporting of the terminal device, and the N1 consecutive times of CSI reporting correspond to one time of complete first CSI reporting. The second vector set is the subset of the first vector set. Indication information included in N2 pieces of target CSI corresponding to N2 times of target CSI reporting in the N1 times of CSI reporting indicates the second vector set. The N2 times of target CSI reporting are all effective CSI reporting. Reporting moments corresponding to the N2 times of target CSI reporting are all before a reporting moment of the second CSI, a CSI reporting moment corresponding to a last time of target CSI reporting completed in the N2 times of target CSI reporting is closest to the reporting moment of the second CSI, and an interval between the reporting moments is greater than first duration. N1 is a positive integer greater than or equal to 2, and N2 is a positive integer less than N1.

With reference to the second aspect, in a possible implementation, the effective CSI reporting is CSI reporting in which the terminal device completes reporting and receives corresponding data new transmission indication information sent by the network device, or the effective CSI reporting is CSI reporting in which the terminal device does not receive, within second duration after completing reporting, the corresponding data retransmission indication information sent by the network device.

With reference to the second aspect, in a possible implementation, the first duration is an interval between a first moment and the reporting moment of the second CSI, and the first moment is a moment corresponding to a reference resource of the second CSI reporting corresponding to the second CSI. Alternatively, the first duration is an interval between a second moment and the reporting moment of the second CSI, the second moment is a moment corresponding to a CSI-RS corresponding to one time of second CSI reporting that is closest to a first moment, the second moment is before the first moment, and the first moment is a moment corresponding to a reference resource of the second CSI reporting corresponding to the second CSI.

With reference to the second aspect, in a possible implementation, the first vector set includes the space-frequency joint vector set, the indication information of the first vector set indicates a first basis vector set and a second weighting coefficient corresponding to the first basis vector set, and the first basis vector set and the second weighting coefficient are used to determine the space-frequency joint vector set.

With reference to the second aspect, in a possible implementation, the first vector set includes the space domain vector set and the frequency domain vector set, and the indication information of the first vector set indicates a second basis vector set, a third weighting coefficient corresponding to the second basis vector set, a third basis vector set, and a fourth weighting coefficient corresponding to the third basis vector set. The second basis vector set and the third weighting coefficient are used to determine the space domain vector set, and the third basis vector set and the fourth weighting coefficient are used to determine the frequency domain vector set.

With reference to the second aspect, in a possible implementation, the first vector set includes the space domain vector set, the indication information of the first vector set indicates a second basis vector set and a third weighting coefficient corresponding to the second basis vector set, and the second basis vector set and the third weighting coefficient are used to determine the space domain vector set.

With reference to the second aspect, in a possible implementation, the second CSI further includes indication information of a fourth basis vector set, the fourth basis vector set represents the frequency domain vector set, and the first vector set includes the space domain vector set and the frequency domain vector set represented by the fourth basis vector set.

With reference to the second aspect, in a possible implementation, the first vector set includes the frequency domain vector set, the indication information of the first vector set indicates a third basis vector set and a fourth weighting coefficient corresponding to the third basis vector set, and the third basis vector set and the fourth weighting coefficient are used to determine the frequency domain vector set.

With reference to the second aspect, in a possible implementation, the second CSI further includes indication information of a fifth basis vector set, the fifth basis vector set represents the space domain vector set, and the first vector set includes the frequency domain vector set and space domain vector set the represented by the fifth basis vector set.

With reference to the second aspect, in a possible implementation, when the second CSI includes the first weighting coefficient corresponding to the subset of the second vector set, the second CSI further includes indication information indicating the subset of the second vector set in the second vector set.

It should be understood that the solution provided in the second aspect is used to implement or cooperatively implement the channel state information reporting method provided in any one of the first aspect. Therefore, the solution can achieve a same or corresponding beneficial effect as the first aspect. Details are not described herein again.

According to a third aspect, this application provides a communication apparatus. The communication apparatus may be the terminal device mentioned in the first aspect. The communication apparatus includes a transceiver unit and a processing unit. The transceiver unit is configured to receive a first channel state information reference signal CSI-RS sent by a network device. The processing unit is configured to trigger, based on a measurement result of the first CSI-RS, the transceiver unit to send first channel state information CSI to the network device. The first CSI includes indication information of a first vector set used to determine a target precoding matrix, and the first vector set includes at least one of a space domain vector set and a frequency domain vector set, or includes a space-frequency joint vector set. The transceiver unit is further configured to receive a second CSI-RS sent by the network device. The processing unit is further configured to trigger, based on a measurement result of the second CSI-RS and a second vector set, the transceiver unit to send second CSI to the network device. The second CSI includes a first weighting coefficient corresponding to a universal set or a subset of the second vector set, the second vector set is a universal set and a subset of the first vector set, and the first weighting coefficient and the second vector set are used to determine the target precoding matrix.

With reference to the third aspect, in a possible implementation, when CSI reporting types corresponding to first CSI reporting for reporting the first CSI and second CSI reporting for reporting the second CSI are periodic or semi-persistent, a CSI reporting periodicity corresponding to the first CSI reporting is greater than a CSI reporting periodicity corresponding to the second CSI reporting.

With reference to the third aspect, in a possible implementation, a CSI-RS corresponding to the first CSI reporting and a CSI-RS corresponding to the second CSI reporting have a same quasi-co-location relationship, or the CSI-RS corresponding to the second CSI reporting is quasi-co-located with the CSI-RS corresponding to the first CSI reporting.

With reference to the third aspect, in a possible implementation, when the CSI reporting types corresponding to the first CSI reporting and the second CSI reporting are both aperiodic, a CSI reporting interval corresponding to the first CSI reporting may be greater than a CSI reporting interval corresponding to the second CSI reporting.

With reference to the third aspect, in a possible implementation, the first CSI reporting and the second CSI reporting may further satisfy at least one of the following: reporting content corresponding to the first CSI reporting is different from that corresponding to the second CSI reporting; the CSI reporting types corresponding to the first CSI reporting and the second CSI reporting are the same or different; when the CSI reporting types corresponding to the first CSI reporting and the second CSI reporting are periodic or semi-persistent, reporting periodicities corresponding to the first CSI reporting and the second CSI reporting are different, and start offsets of the reporting periodicities corresponding to the first CSI reporting and the second CSI reporting may be different or the same; CSI-RS resource types corresponding to the first CSI reporting and the second CSI reporting are the same or different; when the CSI-RS resource types corresponding to the first CSI reporting and the second CSI reporting are periodic or semi-persistent, a periodicity of a CSI-RS resource corresponding to the first CSI reporting is the same as or different from a periodicity of a CSI-RS resource corresponding to the second CSI reporting, and a start offset of the periodicity of the CSI-RS resource corresponding to the first CSI reporting is the same as or different from a start offset of the periodicity of the CSI-RS resource corresponding to the second CSI reporting; quantities of CSI-RS resources corresponding to the first CSI reporting and the second CSI reporting are the same or different; and CSI-RS resource mapping corresponding to the first CSI reporting is the same as or different from that corresponding to the second CSI reporting.

With reference to the third aspect, in a possible implementation, the transceiver unit is further configured to receive first configuration information from the network device. The first configuration information includes first CSI reporting configuration information and second CSI reporting configuration information associated with the first CSI reporting configuration information. The first CSI reporting configuration information corresponds to a first reporting configuration ID, the second reporting configuration corresponds to a second reporting configuration ID, and the first reporting configuration ID is different from the second reporting configuration ID. The first CSI reporting configuration information and the second reporting configuration are respectively used to configure the first CSI reporting and the second CSI reporting.

With reference to the third aspect, in a possible implementation, the first CSI reporting configuration information includes an association identifier indicating the second reporting configuration ID, and the second CSI reporting configuration information includes an association identifier indicating the first reporting configuration ID. Alternatively, the second CSI reporting configuration information includes an association identifier indicating the first reporting configuration ID.

With reference to the third aspect, in a possible implementation, when the CSI reporting types corresponding to the first CSI reporting and the second CSI reporting are both semi-persistent, a semi-persistent CSI trigger state list includes a first semi-persistent CSI trigger state corresponding to the first CSI reporting configuration information and a second semi-persistent trigger state corresponding to the second CSI reporting configuration information. When the CSI reporting types corresponding to the first CSI reporting and the second CSI reporting are both aperiodic, an aperiodic CSI trigger state list includes a first aperiodic CSI trigger state corresponding to the first CSI reporting configuration information and a second aperiodic trigger state corresponding to the second CSI reporting configuration information. When the CSI reporting type corresponding to the first CSI reporting is semi-persistent and the CSI reporting type corresponding to the second CSI reporting is aperiodic, a semi-persistent CSI trigger state list includes a first semi-persistent CSI trigger state corresponding to the first CSI reporting configuration information, and an aperiodic CSI trigger state list includes a second aperiodic trigger state corresponding to the second CSI reporting configuration information. When the CSI reporting type corresponding to the first CSI reporting is aperiodic and the CSI reporting type corresponding to the second CSI reporting is semi-persistent, a semi-persistent CSI trigger state list includes a second semi-persistent CSI trigger state corresponding to the second CSI reporting configuration information, and an aperiodic CSI trigger state list includes a first aperiodic trigger state corresponding to the first CSI reporting configuration information. The first semi-persistent CSI trigger state and the first aperiodic CSI trigger state are associated with the first reporting configuration ID, and the second semi-persistent CSI trigger state and the second aperiodic CSI trigger state are associated with the second reporting configuration ID.

With reference to the third aspect, in a possible implementation, the transceiver unit is further configured to receive second configuration information from the network device. The second configuration information includes first CSI sub-reporting configuration information and second CSI sub-reporting configuration information, and the first CSI sub-reporting configuration information and the second CSI sub-reporting configuration information are respectively used to configure the first CSI reporting and the second CSI reporting.

With reference to the third aspect, in a possible implementation, when the CSI reporting types corresponding to the first CSI reporting and the second CSI reporting are both aperiodic, an aperiodic CSI trigger state list includes a first aperiodic CSI trigger state corresponding to the first CSI sub-reporting configuration information and a second aperiodic CSI trigger state corresponding to the second CSI sub-reporting configuration information. When the CSI reporting types corresponding to the first CSI reporting and the second CSI reporting are both semi-persistent, a semi-persistent CSI trigger state list includes a first semi-persistent CSI trigger state corresponding to the first CSI sub-reporting configuration information and a second semi-persistent CSI trigger state corresponding to the second CSI sub-reporting configuration information. A third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

With reference to the third aspect, in a possible implementation, when the CSI reporting types corresponding to the first CSI reporting and the second CSI reporting are both aperiodic, an aperiodic CSI trigger state list includes a target aperiodic CSI trigger state corresponding to the second configuration information. When the CSI reporting types corresponding to the first CSI reporting and the second CSI reporting are both semi-persistent, a semi-persistent CSI trigger state list includes a target semi-persistent CSI trigger state corresponding to the second configuration information. The target aperiodic CSI trigger state and the target semi-persistent trigger state are both associated with a third reporting configuration ID, and the third reporting configuration ID is a reporting configuration ID corresponding to the second configuration information.

With reference to the third aspect, in a possible implementation, when a reporting trigger message received by the transceiver unit indicates to trigger the target aperiodic CSI trigger state and includes identification information indicating the first CSI reporting, or when the reporting trigger message received by the transceiver unit indicates indication information for triggering the target semi-persistent CSI trigger state and includes the identification information indicating the first CSI reporting, the reporting trigger message is used to trigger the first CSI reporting. When a reporting trigger message received by the transceiver unit indicates to trigger the target aperiodic CSI trigger state and includes identification information indicating the second CSI reporting, or when the reporting trigger message received by the transceiver unit indicates indication information for triggering the target semi-persistent CSI trigger state and includes the identification information indicating the second CSI reporting, the reporting trigger message is used to trigger the second CSI reporting.

With reference to the third aspect, in a possible implementation, when the reporting type of the first CSI reporting is semi-persistent and the reporting type of the second CSI reporting is aperiodic, a semi-persistent CSI trigger state list includes a first semi-persistent CSI trigger state corresponding to the first CSI sub-reporting configuration information, and an aperiodic CSI trigger state list includes a second aperiodic CSI trigger state corresponding to the second CSI sub-reporting configuration information. When the reporting type of the first CSI reporting is aperiodic and the reporting type of the second CSI reporting is semi-persistent, a semi-persistent CSI trigger state list includes a second semi-persistent CSI trigger state corresponding to the second CSI sub-reporting configuration information, and an aperiodic CSI trigger state list includes a first aperiodic CSI trigger state corresponding to the first CSI sub-reporting configuration information. The first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

With reference to the third aspect, in a possible implementation, when the reporting trigger message received by the transceiver unit indicates to trigger the first aperiodic CSI trigger state or the first semi-persistent CSI trigger state, the reporting trigger message is used to trigger the first CSI reporting. When the reporting trigger message received by the transceiver unit indicates to trigger the second aperiodic CSI trigger state or the second semi-persistent CSI trigger state, the reporting trigger message is used to trigger the second CSI reporting.

With reference to the third aspect, in a possible implementation, the processing unit is further configured to: when a time-frequency resource of the first CSI-RS partially or completely overlaps a time-frequency resource of the second CSI-RS, determine the measurement result of the first CSI-RS as a measurement result of the second CSI-RS.

With reference to the third aspect, in a possible implementation, the first CSI corresponds to one time of target first CSI reporting completed by the terminal device before a reporting moment of the second CSI. The target first CSI reporting is effective CSI reporting, and the second vector set is a universal set of the first vector set. A reporting moment of the first CSI is closest to the reporting moment of the second CSI, and an interval between the reporting moments is greater than first duration.

With reference to the third aspect, in a possible implementation, the first CSI corresponds to N1 consecutive times of CSI reporting completed by the terminal device before a reporting moment of the second CSI. The N1 consecutive times of CSI reporting correspond to one time of complete first CSI reporting. The second vector set is a universal set of the first vector set. The N1 times of CSI reporting are all effective CSI reporting, a CSI reporting moment corresponding to a last time of CSI reporting completed in the N1 times of CSI reporting is closest to the reporting moment of the second CSI, and an interval between the reporting moments is greater than first duration. N1 is a positive integer greater than or equal to 2.

With reference to the third aspect, in a possible implementation, the first CSI corresponds to N1 consecutive times of CSI reporting of the terminal device, and the N1 consecutive times of CSI reporting correspond to one time of complete first CSI reporting. The second vector set is the subset of the first vector set. Indication information included in N2 pieces of target CSI corresponding to N2 times of target CSI reporting in the N1 times of CSI reporting indicates the second vector set. The N2 times of target CSI reporting are all effective CSI reporting. Reporting moments corresponding to the N2 times of target CSI reporting are all before a reporting moment of the second CSI, a CSI reporting moment corresponding to a last time of target CSI reporting completed in the N2 times of target CSI reporting is closest to the reporting moment of the second CSI, and an interval between the reporting moments is greater than first duration. N1 is a positive integer greater than or equal to 2, and N2 is a positive integer less than N1.

With reference to the third aspect, in a possible implementation, the effective CSI reporting is CSI reporting in which the terminal device completes reporting and receives corresponding data new transmission indication information sent by the network device, or the effective CSI reporting is CSI reporting in which the terminal device does not receive, within second duration after completing reporting, the corresponding data retransmission indication information sent by the network device.

With reference to the third aspect, in a possible implementation, the first duration is an interval between a first moment and the reporting moment of the second CSI, and the first moment is a moment corresponding to a reference resource of the second CSI reporting corresponding to the second CSI. Alternatively, the first duration is an interval between a second moment and the reporting moment of the second CSI, the second moment is a moment corresponding to a CSI-RS corresponding to one time of second CSI reporting that is closest to a first moment, the second moment is before the first moment, and the first moment is a moment corresponding to a reference resource of the second CSI reporting corresponding to the second CSI.

With reference to the third aspect, in a possible implementation, the first vector set includes the space-frequency joint vector set, the indication information of the first vector set indicates a first basis vector set and a second weighting coefficient corresponding to the first basis vector set, and the first basis vector set and the second weighting coefficient are used to determine the space-frequency joint vector set.

With reference to the third aspect, in a possible implementation, the first vector set includes the space domain vector set and the frequency domain vector set, and the indication information of the first vector set indicates a second basis vector set, a third weighting coefficient corresponding to the second basis vector set, a third basis vector set, and a fourth weighting coefficient corresponding to the third basis vector set. The second basis vector set and the third weighting coefficient are used to determine the space domain vector set, and the third basis vector set and the fourth weighting coefficient are used to determine the frequency domain vector set.

With reference to the third aspect, in a possible implementation, the first vector set includes the space domain vector set, the indication information of the first vector set indicates a second basis vector set and a third weighting coefficient corresponding to the second basis vector set, and the second basis vector set and the third weighting coefficient are used to determine the space domain vector set.

With reference to the third aspect, in a possible implementation, the second CSI further includes indication information of a fourth basis vector set, the fourth basis vector set represents the frequency domain vector set, and the first vector set includes the space domain vector set and the frequency domain vector set represented by the fourth basis vector set.

With reference to the third aspect, in a possible implementation, the first vector set includes the frequency domain vector set, the indication information of the first vector set indicates a third basis vector set and a fourth weighting coefficient corresponding to the third basis vector set, and the third basis vector set and the fourth weighting coefficient are used to determine the frequency domain vector set.

With reference to the third aspect, in a possible implementation, the second CSI further includes indication information of a fifth basis vector set, the fifth basis vector set represents the space domain vector set, and the first vector set includes the frequency domain vector set and space domain vector set the represented by the fifth basis vector set.

With reference to the third aspect, in a possible implementation, when the second CSI includes the first weighting coefficient corresponding to the subset of the second vector set, the second CSI further includes indication information indicating the subset of the second vector set in the second vector set.

According to a fourth aspect, this application provides a communication apparatus. The communication apparatus may be the network device mentioned in the second aspect. The communication apparatus includes a transceiver unit and a processing unit. The processing unit is configured to generate a first channel state information reference signal CSI-RS. The transceiver unit is configured to send the first CSI-RS to a terminal device. The transceiver unit is further configured to receive first channel state information from the terminal device. The first CSI is obtained based on a measurement result of the first CSI-RS, the first CSI includes indication information of a first vector set used to determine a target precoding matrix, and the first vector set includes at least one of a space domain vector set and a frequency domain vector set, or includes a space-frequency joint vector set. The processing unit is further configured to generate a second CSI-RS. The transceiver unit is further configured to send the second CSI-RS to the terminal device. The transceiver unit is further configured to receive second CSI from the terminal device. The second CSI is obtained based on a measurement result of the second CSI-RS and a second vector set, the second CSI includes a first weighting coefficient corresponding to a universal set or a subset of the second vector set, the second vector set is a universal set or a subset of the first vector set, and the first weighting coefficient and the second vector set are used to determine the target precoding matrix.

With reference to the fourth aspect, in a possible implementation, when CSI reporting types corresponding to first CSI reporting for reporting the first CSI and second CSI reporting for reporting the second CSI are periodic or semi-persistent, a CSI reporting periodicity corresponding to the first CSI reporting is greater than a CSI reporting periodicity corresponding to the second CSI reporting.

With reference to the fourth aspect, in a possible implementation, a CSI-RS corresponding to the first CSI reporting and a CSI-RS corresponding to the second CSI reporting have a same quasi-co-location relationship, or the CSI-RS corresponding to the second CSI reporting is quasi-co-located with the CSI-RS corresponding to the first CSI reporting.

With reference to the fourth aspect, in a possible implementation, when the CSI reporting types corresponding to the first CSI reporting and the second CSI reporting are both aperiodic, a CSI reporting interval corresponding to the first CSI reporting may be greater than a CSI reporting interval corresponding to the second CSI reporting.

With reference to the fourth aspect, in a possible implementation, the first CSI reporting and the second CSI reporting may further satisfy at least one of the following: reporting content corresponding to the first CSI reporting is different from that corresponding to the second CSI reporting; the CSI reporting types corresponding to the first CSI reporting and the second CSI reporting are the same or different; when the CSI reporting types corresponding to the first CSI reporting and the second CSI reporting are periodic or semi-persistent, reporting periodicities corresponding to the first CSI reporting and the second CSI reporting are different, and start offsets of the reporting periodicities corresponding to the first CSI reporting and the second CSI reporting may be different or the same; CSI-RS resource types corresponding to the first CSI reporting and the second CSI reporting are the same or different; when the CSI-RS resource types corresponding to the first CSI reporting and the second CSI reporting are periodic or semi-persistent, a periodicity of a CSI-RS resource corresponding to the first CSI reporting is the same as or different from a periodicity of a CSI-RS resource corresponding to the second CSI reporting, and a start offset of the periodicity of the CSI-RS resource corresponding to the first CSI reporting is the same as or different from a start offset of the periodicity of the CSI-RS resource corresponding to the second CSI reporting; quantities of CSI-RS resources corresponding to the first CSI reporting and the second CSI reporting are the same or different; and CSI-RS resource mapping corresponding to the first CSI reporting is the same as or different from that corresponding to the second CSI reporting.

With reference to the fourth aspect, in a possible implementation, the transceiver unit is further configured to send first configuration information to the terminal device. The first configuration information includes first CSI reporting configuration information and second CSI reporting configuration information associated with the first CSI reporting configuration information, the first CSI reporting configuration information corresponds to a first reporting configuration ID, the second reporting configuration corresponds to a second reporting configuration ID, the first reporting configuration ID is different from the second reporting configuration ID, and the first CSI reporting configuration information and the second CSI reporting configuration information are respectively used to configure the first CSI reporting and the second CSI reporting.

With reference to the fourth aspect, in a possible implementation, the first CSI reporting configuration information includes an association identifier indicating the second reporting configuration ID, and the second CSI reporting configuration information includes an association identifier indicating the first reporting configuration ID. Alternatively, the second CSI reporting configuration information includes an association identifier indicating the first reporting configuration ID.

With reference to the fourth aspect, in a possible implementation, when the CSI reporting types corresponding to the first CSI reporting and the second CSI reporting are both semi-persistent, a semi-persistent CSI trigger state list includes a first semi-persistent CSI trigger state corresponding to the first CSI reporting configuration information and a second semi-persistent trigger state corresponding to the second CSI reporting configuration information. When the CSI reporting types corresponding to the first CSI reporting and the second CSI reporting are both aperiodic, an aperiodic CSI trigger state list includes a first aperiodic CSI trigger state corresponding to the first CSI reporting configuration information and a second aperiodic trigger state corresponding to the second CSI reporting configuration information. When the CSI reporting type corresponding to the first CSI reporting is semi-persistent and the CSI reporting type corresponding to the second CSI reporting is aperiodic, a semi-persistent CSI trigger state list includes a first semi-persistent CSI trigger state corresponding to the first CSI reporting configuration information, and an aperiodic CSI trigger state list includes a second aperiodic trigger state corresponding to the second CSI reporting configuration information. When the CSI reporting type corresponding to the first CSI reporting is aperiodic and the CSI reporting type corresponding to the second CSI reporting is semi-persistent, a semi-persistent CSI trigger state list includes a second semi-persistent CSI trigger state corresponding to the second CSI reporting configuration information, and an aperiodic CSI trigger state list includes a first aperiodic trigger state corresponding to the first CSI reporting configuration information. The first semi-persistent CSI trigger state and the first aperiodic CSI trigger state are associated with the first reporting configuration ID, and the second semi-persistent CSI trigger state and the second aperiodic CSI trigger state are associated with the second reporting configuration ID.

With reference to the fourth aspect, in a possible implementation, the transceiver unit is further configured to send second configuration information to the terminal device. The second configuration information includes first CSI sub-reporting configuration information and second CSI sub-reporting configuration information, and the first CSI sub-reporting configuration information and the second CSI sub-reporting configuration information are respectively used to configure the first CSI reporting and the second CSI reporting.

With reference to the fourth aspect, in a possible implementation, when the CSI reporting types corresponding to the first CSI reporting and the second CSI reporting are both aperiodic, an aperiodic CSI trigger state list includes a first aperiodic CSI trigger state corresponding to the first CSI sub-reporting configuration information and a second aperiodic CSI trigger state corresponding to the second CSI sub-reporting configuration information. When the CSI reporting types corresponding to the first CSI reporting and the second CSI reporting are both semi-persistent, a semi-persistent CSI trigger state list includes a first semi-persistent CSI trigger state corresponding to the first CSI sub-reporting configuration information and a second semi-persistent CSI trigger state corresponding to the second CSI sub-reporting configuration information. A third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

With reference to the fourth aspect, in a possible implementation, when the CSI reporting types corresponding to the first CSI reporting and the second CSI reporting are both aperiodic, an aperiodic CSI trigger state list includes a target aperiodic CSI trigger state corresponding to the second configuration information. When the CSI reporting types corresponding to the first CSI reporting and the second CSI reporting are both semi-persistent, a semi-persistent CSI trigger state list includes a target semi-persistent CSI trigger state corresponding to the second configuration information. The target aperiodic CSI trigger state and the target semi-persistent trigger state are both associated with a third reporting configuration ID, and the third reporting configuration ID is a reporting configuration ID corresponding to the second configuration information.

With reference to the fourth aspect, in a possible implementation, when a reporting trigger message sent by the transceiver unit indicates to trigger the target aperiodic CSI trigger state and includes identification information indicating the first CSI reporting, or when the reporting trigger message sent by the transceiver unit indicates to trigger the target semi-persistent CSI trigger state and includes the identification information indicating the first CSI reporting, the reporting trigger message is used to trigger the first CSI reporting. When a reporting trigger message sent by the transceiver unit indicates to trigger the target aperiodic CSI trigger state and includes identification information indicating the second CSI reporting, or when the reporting trigger message sent by the transceiver unit indicates to trigger the target semi-persistent CSI trigger state and includes the identification information indicating the second CSI reporting, the reporting trigger message is used to trigger the second CSI reporting.

With reference to the fourth aspect, in a possible implementation, when the reporting type of the first CSI reporting is semi-persistent and the reporting type of the second CSI reporting is aperiodic, a semi-persistent CSI trigger state list includes a first semi-persistent CSI trigger state corresponding to the first CSI sub-reporting configuration information, and an aperiodic CSI trigger state list includes a second aperiodic CSI trigger state corresponding to the second CSI sub-reporting configuration information. When the reporting type of the first CSI reporting is aperiodic and the reporting type of the second CSI reporting is semi-persistent, a semi-persistent CSI trigger state list includes a second semi-persistent CSI trigger state corresponding to the second CSI sub-reporting configuration information, and an aperiodic CSI trigger state list includes a first aperiodic CSI trigger state corresponding to the first CSI sub-reporting configuration information. The first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

With reference to the fourth aspect, in a possible implementation, when the reporting trigger message sent by the transceiver unit indicates to trigger the first aperiodic CSI trigger state or the first semi-persistent CSI trigger state, the reporting trigger message is used to trigger the first CSI reporting. When the reporting trigger message sent by the transceiver unit indicates to trigger the second aperiodic CSI trigger state or the second semi-persistent CSI trigger state, the reporting trigger message is used to trigger the second CSI reporting.

With reference to the fourth aspect, in a possible implementation, the first CSI corresponds to one time of target first CSI reporting completed by the terminal device before a reporting moment of the second CSI. The target first CSI reporting is effective CSI reporting, and the second vector set is a universal set of the first vector set. A reporting moment of the first CSI is closest to the reporting moment of the second CSI, and an interval between the reporting moments is greater than first duration.

With reference to the fourth aspect, in a possible implementation, the first CSI corresponds to N1 consecutive times of CSI reporting completed by the terminal device before a reporting moment of the second CSI. The N1 consecutive times of CSI reporting correspond to one time of complete first CSI reporting. The second vector set is a universal set of the first vector set. The N1 times of CSI reporting are all effective CSI reporting, a CSI reporting moment corresponding to a last time of CSI reporting completed in the N1 times of CSI reporting is closest to the reporting moment of the second CSI, and an interval between the reporting moments is greater than first duration. N1 is a positive integer greater than or equal to 2.

With reference to the fourth aspect, in a possible implementation, the first CSI corresponds to N1 consecutive times of CSI reporting of the terminal device, and the N1 consecutive times of CSI reporting correspond to one time of complete first CSI reporting. The second vector set is the subset of the first vector set. Indication information included in N2 pieces of target CSI corresponding to N2 times of target CSI reporting in the N1 times of CSI reporting indicates the second vector set. The N2 times of target CSI reporting are all effective CSI reporting. Reporting moments corresponding to the N2 times of target CSI reporting are all before a reporting moment of the second CSI, a CSI reporting moment corresponding to a last time of target CSI reporting completed in the N2 times of target CSI reporting is closest to the reporting moment of the second CSI, and an interval between the reporting moments is greater than first duration. N1 is a positive integer greater than or equal to 2, and N2 is a positive integer less than N1.

With reference to the fourth aspect, in a possible implementation, the effective CSI reporting is CSI reporting in which the terminal device completes reporting and receives corresponding data new transmission indication information sent by the network device, or the effective CSI reporting is CSI reporting in which the terminal device does not receive, within second duration after completing reporting, the corresponding data retransmission indication information sent by the network device.

With reference to the fourth aspect, in a possible implementation, the first duration is an interval between a first moment and the reporting moment of the second CSI, and the first moment is a moment corresponding to a reference resource of the second CSI reporting corresponding to the second CSI. Alternatively, the first duration is an interval between a second moment and the reporting moment of the second CSI, the second moment is a moment corresponding to a CSI-RS corresponding to one time of second CSI reporting that is closest to a first moment, the second moment is before the first moment, and the first moment is a moment corresponding to a reference resource of the second CSI reporting corresponding to the second CSI.

With reference to the fourth aspect, in a possible implementation, the first vector set includes the space-frequency joint vector set, the indication information of the first vector set indicates a first basis vector set and a second weighting coefficient corresponding to the first basis vector set, and the first basis vector set and the second weighting coefficient are used to determine the space-frequency joint vector set.

With reference to the fourth aspect, in a possible implementation, the first vector set includes the space domain vector set and the frequency domain vector set, and the indication information of the first vector set indicates a second basis vector set, a third weighting coefficient corresponding to the second basis vector set, a third basis vector set, and a fourth weighting coefficient corresponding to the third basis vector set. The second basis vector set and the third weighting coefficient are used to determine the space domain vector set, and the third basis vector set and the fourth weighting coefficient are used to determine the frequency domain vector set.

With reference to the fourth aspect, in a possible implementation, the first vector set includes the space domain vector set, the indication information of the first vector set indicates a second basis vector set and a third weighting coefficient corresponding to the second basis vector set, and the second basis vector set and the third weighting coefficient are used to determine the space domain vector set.

With reference to the fourth aspect, in a possible implementation, the second CSI further includes indication information of a fourth basis vector set, the fourth basis vector set represents the frequency domain vector set, and the first vector set includes the space domain vector set and the frequency domain vector set represented by the fourth basis vector set.

With reference to the fourth aspect, in a possible implementation, the first vector set includes the frequency domain vector set, the indication information of the first vector set indicates a third basis vector set and a fourth weighting coefficient corresponding to the third basis vector set, and the third basis vector set and the fourth weighting coefficient are used to determine the frequency domain vector set.

With reference to the fourth aspect, in a possible implementation, the second CSI further includes indication information of a fifth basis vector set, the fifth basis vector set represents the space domain vector set, and the first vector set includes the frequency domain vector set and space domain vector set the represented by the fifth basis vector set.

With reference to the fourth aspect, in a possible implementation, when the second CSI includes the first weighting coefficient corresponding to the subset of the second vector set, the second CSI further includes indication information indicating the subset of the second vector set in the second vector set.

According to a fifth aspect, this application provides a computer program product. The computer program product includes instructions. When the instructions are run on a computer, the computer is caused to perform the method according to any one of the first aspect or the possible implementations of the first aspect, or perform the method according to any one of the second aspect or the possible implementations of the second aspect.

According to a sixth aspect, this application provides a computer-readable storage medium. The computer-readable storage medium stores a computer program. When being executed, the computer program is used to perform the method according to any one of the first aspect or the possible implementations of the first aspect, or perform the method according to any one of the second aspect or the possible implementations of the second aspect.

According to a seventh aspect, this application provides a communication apparatus, including at least one processor and a memory. The memory is configured to store a computer program. The processor is configured to execute the computer program stored in the memory, to cause the communication apparatus to perform the method according to any one of the first aspect or the possible implementations of the first aspect, or perform the method according to any one of the second aspect or the possible implementations of the second aspect.

According to an eighth aspect, an embodiment of this application provides a chip, including a processor and an interface. The input/output interface is configured to exchange information or data, and the processing circuit is configured to run instructions, to cause an apparatus with the chip to perform the method according to any one of the first aspect or the possible implementations of the first aspect, or perform the method according to any one of the second aspect or the possible implementations of the second aspect.

According to a ninth aspect, this application provides a chip system. The chip system includes a processor, configured to support an apparatus with the chip system in performing the method according to any one of the first aspect or the possible implementations of the first aspect, or performing the method according to any one of the second aspect or the possible implementations of the second aspect, for example, generating or processing data and/or information in the foregoing method. In a possible design, the chip system further includes a memory. The memory is configured to store program instructions and data that are necessary for a data sending device. The chip system may include a chip, or may include the chip and another discrete component.

According to a tenth aspect, this application provides a communication system. The communication system includes a terminal device that has a function of implementing the method and the possible designs in the first aspect and a network device that has a function of implementing the method and the possible designs in the second aspect.

In the channel state information reporting method provided in this application, indication information indicating a vector set that can represent a precoding matrix, and a weighting coefficient used together with the vector set to determine the precoding matrix are reported through two pieces of independent CSI, so that overheads of CSI reporting are effectively reduced, and it can be ensured that communication resources of a communication system can be properly used.

**BRIEF DESCRIPTION OF DRAWINGS**

FIG. 1 is a diagram of a structure of a communication system according to this application;
FIG. 2 is a diagram of a structure of another communication system according to this application;
FIG. 3 is a schematic flowchart of an existing method for feeding back CSI of a downlink channel or a precoding matrix according to this application;
FIG. 4 is a schematic flowchart of a channel state information reporting method according to this application;
FIG. 5 is a diagram of reporting CSI for a plurality of times in a time-division manner according to this application;
FIG. 6 is a diagram of a CSI reporting time sequence according to this application;
FIG. 7 is a diagram of another CSI reporting time sequence according to this application;
FIG. 8 is a diagram of still another CSI reporting time sequence according to this application;
FIG. 9 is a schematic flowchart of another channel state information reporting method according to this application;
FIG. 10 is a diagram of a structure of a communication apparatus according to this application;
FIG. 11 is a diagram of a structure of another communication apparatus according to this application; and
FIG. 12 is a diagram of a structure of another communication apparatus according to this application.

**DESCRIPTION OF EMBODIMENTS**

The following clearly and completely describes technical solutions in embodiments of this application with reference to accompanying drawings in embodiments of this application.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th generation, 5G) system, or a new radio (new radio, NR) system. In addition, the technical solutions may be further applied to a subsequently evolved system, for example, a 6th generation 6G communication system or even a more advanced 7th generation 7G communication system.

A network device in embodiments of this application may be a device that communicates with a terminal device, may be a base station, an access point, or a network device, or may be a device that communicates with a wireless terminal over an air interface in an access network by using one or more sectors. The network device may be configured to mutually convert a received over-the-air frame and an IP packet and serve as a router between the wireless terminal and a rest portion of the access network. The rest portion of the access network may include an Internet protocol (IP) network. The network device may further coordinate attribute management of the air interface. For example, the network device may be an evolved NodeB (evolved NodeB, eNB, or eNodeB) in an LTE system or a radio controller in a cloud radio access network (cloud radio access network, CRAN) scenario. Alternatively, the access device may be a relay station, an access point, a vehicle-mounted device, a wearable device, an access device in a future 5G network, a network device in a future evolved PLMN network, or the like, may be an access point (access point, AP) in a WLAN, or may be a gNB in a new radio (new radio, NR) system. This is not limited in embodiments of this application. It should be noted that, in a 5G system, there may be one or more transmission reception points (transmission reception points, TRPs) under one base station. All TRPs belong to a same cell, and a measurement reporting method described in embodiments of this application may be used for each of the TRPs and the terminal. In another scenario, the network device may be further divided into a control unit (control unit, CU) and a data unit (data unit, DU). There may be a plurality of DUs under one CU. The measurement reporting method described in embodiments of this application may be used for each DU and the terminal. A difference between the CU-DU separation scenario and the multi-TRP scenario lies in that the TRP is merely a radio frequency unit or an antenna device while the DU may implement a protocol stack function, for example, the DU may implement a physical layer function.

In addition, in embodiments of this application, the network device is a device in an access network (radio access network, RAN), in other words, a RAN node that connects the terminal device to a wireless network. For example, by way of example rather than limitation, the network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), or a wireless fidelity (wireless fidelity, Wi-Fi) access point (access point, AP).

The network device may serve a cell. The terminal device communicates with the network device on a transmission resource (for example, a frequency domain resource, or in other words, a frequency spectrum resource) used for the cell. The cell may be a cell corresponding to the network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells are characterized by a small coverage area and low transmit power, and are applicable to providing a high-speed data transmission service.

The terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

By way of example rather than limitation, in embodiments of this application, the wearable device may also be referred to as a wearable intelligent device, and is a general name of a wearable device developed by intelligently designing daily wear by using a wearable technology, for example, glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that are dedicated to only one type of application function and need to work with other devices such as smartphones, for example, various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for human-machine interconnection or thing-thing interconnection.

If the various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood as that any device that can perform data communication with the base station may be considered as a terminal device.

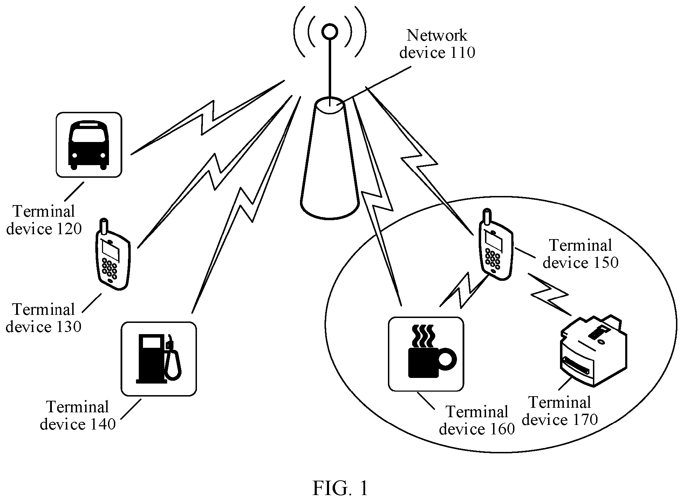

FIG. 1 is a diagram of a structure of a communication system according to this application. In FIG. 1, one network device 110, a terminal device 120, a terminal device 130, a terminal device 140, a terminal device 150, a terminal device 160, and a terminal device 170 are included. For example, the network device 110 works in an evolved universal mobile telecommunications system terrestrial radio access (evolved UMTS terrestrial radio access, E-UTRA) system, or works in an NR system, or works in a next generation communication system or another communication system. The network device 110 may communicate with the terminal device 120 to the terminal device 170 through Uu interfaces. The network device 110 and the terminal device 120 to the terminal device 170 form a communication system. In the communication system, the terminal device 120 to the terminal device 170 may send uplink data to the network device 110, the network device 110 needs to receive the uplink data sent by the terminal device 120 to the terminal device 170, and the network device 110 may send downlink data to the terminal device 120 to the terminal device 170. In addition, the terminal device 150 to the terminal device 170 may also form a communication system. In the communication system, the network device may send downlink information to the terminal device 150, and the terminal device 150 may also send downlink information to the terminal devices 160 and 170.

In this application, one network device may serve a plurality of terminal devices. In FIG. 1, only some of the terminal devices are used as an example.

The network device in FIG. 1 is, for example, a base station. The network device corresponds to different devices in different systems. For example, the network device may correspond to an eNB in a 4G system, and correspond to a 5G network device like a gNB in a 5G system. The technical solutions provided in embodiments of this application may also be applied to a future mobile communication system. Therefore, the network device in FIG. 1 may also correspond to a network device in the future mobile communication system. In FIG. 1, for example, the network device is a base station. Actually, based on the foregoing descriptions, the network device may alternatively be a device like an RSU.

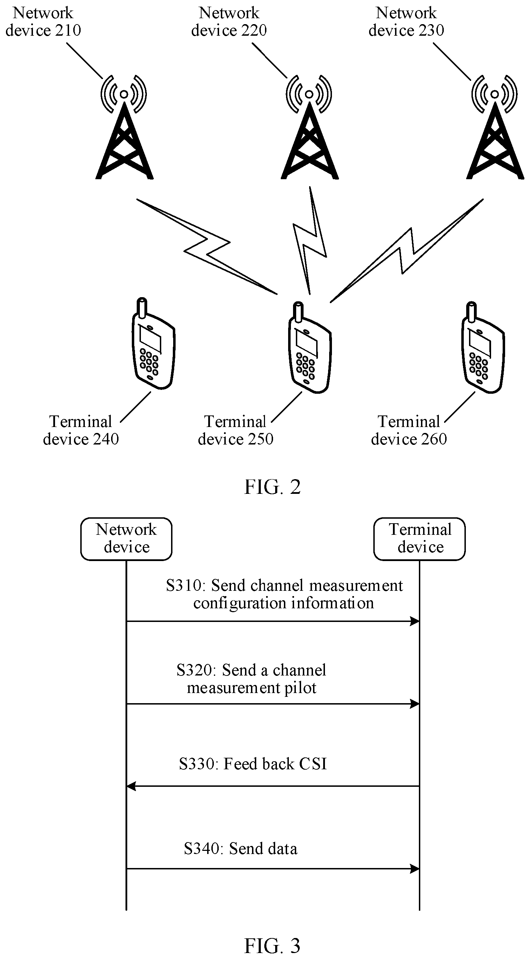

FIG. 2 is a diagram of a structure of another communication system according to this application. As shown in FIG. 2, a plurality of network devices (a network device 210, a network device 220, and a network device 230) and a plurality of terminal devices (a terminal device 240, a terminal device 250, and a terminal device 260) form a communication system, and the plurality of network devices all serve one terminal device. For example, the network device 210, the network device 220, and the network device 230 all serve the terminal device 250.

The network device in FIG. 1 or FIG. 2 is, for example, a base station. The network device corresponds to different devices in different systems. For example, the network device may correspond to an eNB in a 4G system, and correspond to a 5G network device like a gNB in a 5G system. The technical solutions provided in this application may also be applied to a future mobile communication system. Therefore, the network device in FIG. 1 may also correspond to a network device in the future mobile communication system. In FIG. 1 or FIG. 2, for example, the network device is a base station. Actually, based on the foregoing descriptions, the network device may alternatively be a device like an RSU.

It should be understood that the communication system shown in FIG. 1 or FIG. 2 may further include more network nodes, for example, another terminal device or network device. The network devices or terminal devices included in the communication systems shown in FIG. 1 or FIG. 2 may be the network devices or terminal devices in the foregoing various forms. Details are not shown one by one in the figure in this embodiment of this application.

A 5G communication system has higher requirements on aspects such as system capacity and spectral efficiency. In the 5G communication system, application of a massive multiple-antenna technology (massive MIMO) technology plays a critical role in improving the spectral efficiency of the system. When the MIMO technology is used, a network device needs to precode data before sending the data to a terminal device. How to perform precoding depends on channel state information (channel state information, CSI) fed back by user equipment to the network device.

In a TDD system, because an uplink channel and a downlink channel use a same frequency band, reciprocity exists. A network device may obtain CSI of the downlink channel through the uplink channel by using the channel reciprocity, to further perform precoding. However, in an FDD system, because an interval between uplink and downlink frequency bands is greater than bandwidth, there is no complete reciprocity between uplink and downlink channels. In the FDD system, a terminal device needs to feed back CSI of the downlink channel to a network device. FIG. 3 is a schematic flowchart of an existing method for feeding back CSI of a downlink channel or a precoding matrix according to this application. As shown in FIG. 3, the method may include the following steps.

S310: A network device sends channel measurement configuration information to a terminal device. The channel measurement configuration information is used to configure time and a behavior of performing channel measurement by the terminal device.

S320: The network device sends, to the terminal device, a channel measurement pilot used for channel measurement. Herein, the pilot may also be understood as a reference signal (reference signal, RS).

S330: The terminal device performs measurement based on the channel measurement pilot sent by the network device, performs calculation based on a measurement result to obtain a final CSI feedback quantity, and feeds back CSI to the network device.

S340: The network device sends data based on the CSI fed back by the terminal device.

The CSI may include parameters such as a PMI, a channel rank indicator (rank indicator, RI), and a channel state indicator (channel quality indicator, CQI). For example, the network device may determine, based on the PMI fed back by the terminal device, precoding for transmission of the data to the terminal device; the access network device may determine, based on the RI fed back by the terminal device, a quantity of streams for transmission of the data to the terminal device; and the access network device may determine, based on the CQI fed back by the terminal device, a modulation order and a channel coding rate for transmission of the data to the terminal device.

During actual implementation, the PMI is determined and reported based on a codebook, and indicates a precoding matrix. The network device restores the precoding matrix based on the PMI and the codebook. The precoding matrix may be a precoding matrix determined by the network device based on a channel matrix of each frequency domain unit. For example, the precoding matrix may be obtained by performing singular value decomposition (singular value decomposition, SVD) on a channel matrix or a covariance matrix of the channel matrix, or may be obtained by performing eigenvalue decomposition (eigenvalue decomposition, EVD) on the covariance matrix of the channel matrix. The precoding matrix includes channel information of a transmit end of the network device. Design of an FDD CSI codebook is a basic and important problem in a 5G communication system.

In a 3GPP R15 Type II (Type II) codebook, a space domain (angle domain) compression idea is used, and sparsity of a channel in angle domain is used. To be specific, a multipath signal has strong energy in several angle directions and weak energy in other directions. In this case, a space domain discrete Fourier transform (discrete Fourier transform, DFT) basis vector indicates an angle direction with strong energy, and the precoding matrix is represented by a linear combination of several space domain DFT basis vectors. In a 3GPP R16 Type II codebook, a dual-domain compression idea is proposed. Frequency domain (delay domain) compression is added based on the R15 codebook by using frequency domain correlations between amplitudes and phase coefficients of different subbands. Channel information is separately compressed and fed back in space domain and frequency domain. The precoding matrix is approximately represented by using a weighted sum of a space-frequency component matrix. The space-frequency component matrix is constructed by using one or more space domain basis vectors compressed in space domain and one or more frequency domain basis vectors compressed in frequency domain.

To fully use the sparsity of the channel in space domain and sparsity of the channel in frequency domain, and improve PMI feedback precision, feedback may be performed by using a codebook of statistical eigen subspaces. In the codebook, statistical eigen subspace bases and a corresponding linear combination coefficient are used to represent a downlink channel or a precoding matrix. The codebook may be similar to the R16 Type II codebook, and may be represented in a form of a bilinear combination using one group of DFT bases in space domain and one group of DFT bases in frequency domain. Further, the codebook may alternatively be a space-frequency joint codebook, and a linear combination of one group of space-frequency joint eigen subspace bases is used for representation. The statistical eigen subspace basis is an eigenvector or a vector set that may indicate a statistical change rule of a channel in space domain, frequency domain, or space-frequency joint domain, and is usually obtained by performing eigenvalue decomposition on a statistical covariance matrix of the channel. The space-frequency joint domain is a joint domain of the space domain and the frequency domain. Generally, a signal is propagated through a plurality of paths, leaves a transmit end at different angles, and arrives at a receive end at different angles after different delays. The space domain mainly describes an angle direction feature of the channel, and the frequency domain mainly describes a delay distribution feature of the channel. Both are considered from a single dimension. The space-frequency joint domain considers a combination of the space domain and the frequency domain, and mainly describes angle direction and delay distribution features of a multipath.

In embodiments of this application, a statistical eigen subspace basis indicating a statistical change rule of a channel in space domain may also be understood as a space domain basis, a space domain basis vector, or a space domain vector set; a statistical eigen subspace basis indicating a statistical change rule of the channel in frequency domain may also be referred to as a frequency domain basis, a frequency domain basis vector, or a frequency domain vector set; and a statistical eigen subspace basis indicating a statistical change rule of the channel in space-frequency joint domain may also be referred to as a space-frequency joint basis, a space-frequency joint basis vector, or a space-frequency joint vector set.

In an existing CSI reporting solution used for precoding matrix reporting, basis indication information indicating one or more statistical eigen subspace bases selected by the terminal device and/or one or more DFT bases, and a corresponding linear combination coefficient are both completed in one time of CSI reporting. However, a data volume of the basis indication information is large. Consequently, overheads of the existing CSI reporting solution used for precoding matrix reporting are high. This is not conducive to efficient use of communication resources.

Therefore, a technical problem to be resolved in this application is how to reduce overheads of a CSI reporting solution used for reporting a precoding matrix or a downlink channel, to ensure efficient use of communication resources.

To resolve the foregoing technical problem, this application provides a channel state information reporting method. In the channel state information reporting method provided in this application, indication information indicating a vector set representing a precoding matrix and a weighting coefficient used together with the vector set to determine the precoding matrix are reported through two pieces of independent CSI, and the two pieces of independent CSI correspond to different channel state information reference signals (CSI reference signals, CSI-RSs). Indication information of a basis and a weighting coefficient are independently reported, so that overheads of CSI reporting are effectively reduced, to ensure that communication resources of a communication system can be properly used.

It should be understood that, in embodiments of this application, reporting a precoding matrix by using CSI may be understood as reporting a downlink precoding matrix by using the CSI, or may be understood as reporting a downlink full channel matrix by using the CSI. For ease of description, in embodiments of this application, a description such as "reporting a precoding matrix by using CSI" is uniformly used for description.

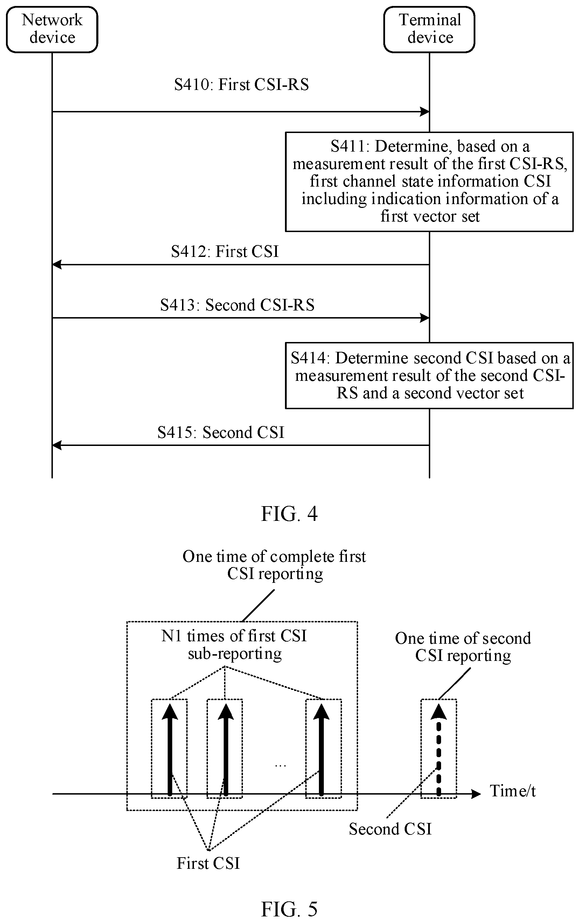

FIG. 4 is a schematic flowchart of a channel state information reporting method according to this application. It should be understood that, in embodiments of this application, the channel state information reporting method provided in this application is described by using a network device and a terminal device as methods. This is an example instead of a limitation. The channel state information reporting method provided in this application may alternatively be performed by a chip, a chip system, a processor, or the like that is used in the terminal device and the network device. This is not specifically limited in this application. In addition, in the channel state information reporting method provided in this application, a precoding matrix is jointly represented by one group of statistical eigen subspace bases and/or one group of DFT bases, and a linear combination coefficient. Herein, the group of statistical eigen subspace bases may be understood as one vector set, and a basis included in the group of statistical eigen subspace bases is at least one vector included in the vector set. For ease of understanding, in embodiments of this application, a case in which the precoding matrix is represented by one group of statistical eigen subspace bases is used as an example for description. As shown in FIG. 4, the channel state information reporting method provided in this application may include the following steps.

S410: The network device sends a first channel state information reference signal CSI-RS to the terminal device. Correspondingly, the terminal device receives the first CSI-RS from the network device.

In some feasible implementations, the network device may generate one piece of first channel state information reference information CSI-RS, and send the first CSI-RS to the terminal device on a corresponding time domain resource. Correspondingly, the terminal device also receives the first CSI-RS from the network device on the time-frequency resource. The first CSI-RS is mainly used by the terminal device to feed back first CSI. It should be understood that, during actual implementation, the network device sends corresponding CSI reporting configuration information (namely, CSI-ReportConfig) to the terminal device, and the terminal device can perform CSI reporting based on the CSI reporting configuration information to send the first CSI. The CSI reporting configuration information includes configuration information of the first CSI-RS. The time-frequency resource for transmission of the first CSI-RS is indicated by the configuration information of the first CSI-RS.

S411: The terminal device determines, based on a measurement result of the first CSI-RS, first channel state information CSI including indication information of a first vector set.

In some feasible implementations, after the network device sends the first CSI-RS to the terminal device, the terminal device may measure a downlink channel based on the first CSI-RS, and determine the first CSI based on the measurement result of the first CSI-RS. The first CSI may include the indication information of the first vector set, and the first vector set may be used to determine a target precoding matrix.

For example, the terminal device may determine, based on the measurement result of the first CSI-RS, the first vector set that can represent the target precoding matrix. Then, the terminal device may generate the first CSI including the indication information of the first vector set.

It should be understood that the first vector set is a group of statistical eigen subspace bases that can represent the target precoding matrix.

In this embodiment of this application, the target precoding matrix satisfies the following formula:

$$H_{dl} = W \times C \quad (1)$$

$H_{dl}$ is the target precoding matrix; W is the group of statistical eigen subspace bases representing the target precoding matrix, namely, the first vector set; and C is a linear combination coefficient or a weighting coefficient representing the target precoding matrix. Optionally, C may be a weighting coefficient obtained by projecting or mapping the target precoding matrix onto the first vector set. It should be understood that the weighting coefficient C is also a matrix, and corresponds to at least one coefficient corresponding to at least one vector in the first vector set.

Further, the first vector set may include at least one of a space domain vector set and a frequency domain vector set, or may include a space-frequency joint vector set.

In a first optional implementation, the target precoding matrix may be determined based on the space-frequency joint vector set and a corresponding weighting coefficient. In this case, the first vector set may include the space-frequency joint vector set. Herein, the space-frequency joint vector set is a group of space-frequency joint statistical eigen subspace bases. During actual implementation, because the space-frequency joint statistical eigen subspace describes a statistical feature of a downlink channel in space-frequency joint domain, considering problems like overheads, the space-frequency joint statistical eigen subspace may be determined based on a basis vector set (for ease of differentiation, a first basis vector set is used for description below) and a group of weighting coefficients (for ease of differentiation, a second weighting coefficient is used for description below).

For example, in this implementation, the target precoding matrix may satisfy the following formula:

$$H_{dl} = W_1 \times C_1 = B_1 \times C_2 \times C_1 \quad (2)$$

$W_1$ is the foregoing space-frequency joint vector set; $C_1$ is a weighting coefficient obtained by projecting or mapping the target precoding matrix $H_{dl}$ onto the space-frequency joint vector set $W_1$; and $C_2$ is a second weighting coefficient obtained by projecting or mapping the space-frequency joint vector set onto a first basis vector set $B_1$. In other

words, the second weighting coefficient $C_2$ and the first basis vector set $B_1$ are used by the network device to determine the space-frequency joint vector set $W_1$.

When the first vector set includes the space-frequency joint vector set, the indication information of the first vector set may indicate the first basis vector set $B_1$ and the second weighting coefficient $C_2$. The first basis vector set $B_1$ and the second weighting coefficient $C_2$ may be used by the network device to determine the space-frequency joint vector set $W_1$. During specific implementation, the indication information of the first vector set may directly include the first basis vector set $B_1$ and the second weighting coefficient $C_2$, or the indication information of the first vector set may be indication information that can indicate the first basis vector set $B_1$ and the second weighting coefficient $C_2$.

In a second optional implementation, the target precoding matrix may be determined based on the space domain vector set, the frequency domain vector set, and a corresponding weighting coefficient. In this case, the first vector set may include the space domain vector set and the frequency domain vector set. It should be understood that the space domain vector set is a group of statistical eigen subspace bases in space domain, and the frequency domain vector set is a group of statistical eigen subspace bases in frequency domain. In this case, the target precoding matrix may be determined based on the group of statistical eigen subspace bases in space domain, the group of statistical eigen subspace bases in frequency domain, and the corresponding weighting coefficient. Similarly, considering problems like overheads, the space domain vector set may be determined based on a basis vector set (for ease of differentiation, a second basis vector set is used for description below) and a group of weighting coefficients (for ease of differentiation, a third weighting coefficient is used for description below), and the frequency domain vector set may also be determined based on a basis vector set (for ease of differentiation, a third basis vector set is used for description below) and a group of weighting coefficients (for ease of differentiation, a fourth weighting coefficient is used for description below).

For example, in this implementation, the target precoding matrix may satisfy the following formula:

$$H_{dl} = W_2 \times C_1 \times W_3{}^{H} = B_2 \times C_3 \times C_1 \times (C_4 \times B_3)^{H} \quad (3)$$

$W_2$ is the foregoing space domain vector set; $W_3$ is the foregoing frequency domain vector set; $C_1$ is the weighting coefficient obtained by projecting or mapping the target precoding matrix onto the space domain vector set $W_2$ and the frequency domain vector set $W_3$; $C_3$ is the third weighting coefficient obtained by projecting or mapping the space domain vector set $W_2$ onto the second basis vector set $B_2$, or the second basis vector set $B_2$ and the third weighting coefficient $C_3$ may be used by the network device to determine the space domain vector set; and $C_4$ is the fourth weighting coefficient obtained by projecting or mapping the frequency domain vector set $W_3$ onto the third basis vector set $B_3$, or the third basis vector set $B_3$ and the fourth weighting coefficient $C_4$ may be used by the network device to determine the frequency domain vector set. It should be understood that in this embodiment of this application, $(X)^{H}$ indicates a conjugate transpose matrix of a matrix X. $(C_4 \times B_3)^{H}$ described above is a conjugate transpose matrix of a matrix $C_4 \times B_3$.

When the first vector set includes the space domain vector set and the frequency domain vector set, the indication information of the first vector set may indicate the second basis vector set $B_2$, the third weighting coefficient $C_3$, the third basis vector set $B_3$, and the fourth weighting coefficient $C_4$. During specific implementation, the indication information of the first vector set may directly include the second basis vector set $B_2$, the third weighting coefficient $C_3$, the third basis vector set $B_3$, and the fourth weighting coefficient $C_4$, or the indication information of the first vector set may be indication information that can indicate the second basis vector set $B_2$, the third weighting coefficient $C_3$, the third basis vector set $B_3$, and the fourth weighting coefficient $C_4$.

In a third optional implementation, the target precoding matrix may be determined based on the space domain vector set, a frequency domain vector set represented by a fourth basis vector set, and a corresponding weighting coefficient. It should be understood that the space domain vector set is a group of statistical eigen subspace bases in space domain, and the frequency domain vector set is a basis vector set. Similarly, considering problems like overheads, the space domain vector set may still be determined based on a second basis vector set and a third weighting coefficient.

For example, in this implementation, the target precoding matrix may satisfy the following formula:

$$H_{dl} = W_2 \times C_1 \times W_3 = B_2 \times C_3 \times C_1 \times B_4{}^{H} \quad (4)$$

$W_2$ is the foregoing space domain vector set; $W_3$ is the foregoing frequency domain vector set; $C_1$ is the weighting coefficient obtained by projecting or mapping the target precoding matrix onto the space domain vector set $W_2$ and the frequency domain vector set $W_3$; and $C_3$ is the third weighting coefficient obtained by projecting or mapping the space domain vector set $W_2$ onto the second basis vector set $B_2$, or the second basis vector set $B_2$ and the third weighting coefficient $C_3$ may be used by the network device to determine the space domain vector set. The frequency domain vector set $W_3$ is the fourth basis vector set $B_4$.

Optionally, in this implementation, the first CSI may report only the space domain vector set $W_2$. In this case, the first vector set may include only the space domain vector set $W_2$. In this case, the indication information of the first vector set may indicate the second basis vector set $B_2$ and the third weighting coefficient $C_3$.

Optionally, in this implementation, the first CSI may report the space domain vector set $W_2$ and the frequency domain vector set $W_3$ represented by the fourth basis vector set $B_4$. In this case, the first vector set may include the space domain vector set $W_2$ and the fourth basis vector set $B_4$. In this case, the indication information of the first vector set may indicate the second basis vector set $B_2$, the third weighting coefficient $C_3$, and the fourth basis vector set $B_4$.

In a fourth optional implementation, the target precoding matrix may be determined based on the frequency domain vector set, a space domain vector set represented by a fifth basis vector set, and a corresponding weighting coefficient. It should be understood that the frequency domain vector set is a group of statistical eigen subspace bases in frequency domain, and the space domain vector set is a basis vector set. Similarly, considering problems like overheads, the frequency domain vector set may still be determined based on a third basis vector set and a fourth weighting coefficient.

For example, in this implementation, the target precoding matrix may satisfy the following formula:

$$H_{dl} = W_2 \times C_1 \times W_3 = B_5 \times C_1 \times (C_4 \times B_3)^H \quad (5)$$

$W_2$ is the foregoing space domain vector set; $W_3$ is the foregoing frequency domain vector set; $C_1$ is the weighting coefficient obtained by projecting or mapping the target precoding matrix onto the space domain vector set $W_2$ and the frequency domain vector set $W_3$; and $C_4$ is the fourth weighting coefficient obtained by projecting or mapping the frequency domain vector set $W_3$ onto the third basis vector set $B_3$, or the third basis vector set $B_3$ and the fourth weighting coefficient $C_4$ may be used by the network device to determine the frequency domain vector set $W_3$. The space domain vector set $W_2$ is the fifth basis vector set $B_5$.

Optionally, in this implementation, the first CSI may report only the frequency domain vector set $W_3$. In this case, the first vector set may include only the frequency domain vector set $W_3$. In this case, the indication information of the first vector set may indicate the third basis vector set $B_3$ and the fourth weighting coefficient $C_4$.

Optionally, in this implementation, the first CSI may report the frequency domain vector set $W_3$ and the space domain vector set $W_2$ represented by the fifth basis vector set $B_5$. In this case, the first vector set may include the space domain vector set $W_2$ and the fourth basis vector set $B_4$. In this case, the indication information of the first vector set may indicate the third basis vector set $B_3$, the fourth weighting coefficient $C_4$, and the fifth basis vector set $B_5$.

It should be noted that a basis vector set (for example, the first basis vector set $B_1$ and the second basis vector set $B_2$ described above) in this application includes at least one basis vector. The at least one basis vector is well known to the network device and the terminal device. One basis vector set may also be referred to as a group of well-known bases. Optionally, the basis vector set in this application may be a discrete Fourier transform (discrete Fourier transform, DFT) vector set or an oversampled DFT vector set. It should be understood that the basis vector set provided in this application may alternatively be a vector set of another type. This is not specifically limited in this application.

S412: The terminal device sends the first CSI to the network device. Correspondingly, the network device receives the first CSI from the terminal device.

In some feasible implementations, after determining the first CSI, the terminal device may send the first CSI to the network device. During specific implementation, the terminal device may send the first CSI to the network device based on first CSI reporting configured by the network device for the terminal device. Correspondingly, the network device may receive the first CSI from the terminal device.

It should be noted that, in the channel state information reporting method provided in this application, the network device configures two different types of CSI reporting for the terminal device, and the two different types of CIS reporting correspond to two pieces of different CSI reporting configuration information (namely, CSI-ReportConfig). One type of CSI reporting may be used by the terminal device to send the first CSI to the network device. For ease of understanding, such CSI reporting is replaced with the first CSI reporting. It should be understood that the first CSI reporting provided in this application is mainly used by the terminal device to report, to the network device, a vector set that can represent a precoding matrix. Each time the terminal device completes one time of first CSI reporting, that is, the terminal device reports a vector set to the network device, the vector set may be used by the network device to restore a precoding matrix. The first CSI is used as an example. The terminal device sends the first CSI to the network device through one time of first CSI reporting, to complete reporting of the first vector set.

The other type of CSI reporting may be used by the terminal device to send second CSI to the network device. For ease of understanding, such CSI reporting is replaced with second CSI reporting. The second CSI reporting is further explained and described below.

It should be further noted that a specific behavior (a reporting manner, reporting time, and the like) of the first CSI reporting may be determined by CSI reporting configuration information corresponding to the first CSI reporting, and the terminal device may complete each time of first CSI reporting based on the CSI reporting configuration information corresponding to the first CSI reporting.

S413: The network device sends a second CSI-RS to the terminal device. Correspondingly, the terminal device receives the second CSI-RS from the network device.

In some feasible implementations, the network device may generate one piece of second CSI-RS, and send the second CSI-RS to the terminal device on a corresponding time domain resource. Correspondingly, the terminal device also receives the second CSI-RS from the network device on the time-frequency resource. The second CSI-RS may be used by the terminal device to feed back the second CSI. It should be understood that the second CSI-RS and the first CSI-RS are different CSI-RSs, the second CSI-RS is mainly used by the terminal device to complete reporting of the second CSI, and the first CSI-RS is mainly used by the terminal device to complete reporting of the first CSI. The time-frequency resource for transmission of the second CSI-RS is indicated by the configuration information of the second CSI-RS.

It should be understood that during actual implementation, step S413 may be performed after step S412, or may be performed before step S412. A time sequence of performing step S412 and step S413 is not specifically limited in this application. An example in which step S413 is performed after step S412 is used in the accompanying drawings of this application.

S414: The terminal device determines the second CSI based on a measurement result of the second CSI-RS and a second vector set.

In some feasible implementations, the terminal device may determine the second CSI based on the measurement result of the second CSI-RS and the second vector set. The second vector set is a universal set or a subset of the first vector set. In other words, the second vector set includes all or some of vectors in the first vector set. The second CSI may include a first weighting coefficient corresponding to the second vector set, or the second CSI may include the first weighting coefficient corresponding to the subset of the second vector set. The first weighting coefficient and the second vector set may be used by the network device to determine the target precoding matrix.

The following describes in detail specific content of the second CSI with reference to two scenarios in which the second vector set is the universal set of the first vector set and the second vector set is the subset of the first vector set.

Scenario 1: The second vector set is the universal set of the first vector set.

When the second vector set is the universal set of the first vector set, the terminal device may determine, based on the measurement result of the second CSI-RS and the first vector set, whether the second CSI corresponds to a universal set of the second vector set or a subset of the second vector set.

In a first case, if the terminal device determines that the second CSI corresponds to the universal set of the second vector set, the first weighting coefficient is a weighting coefficient $C_1$ obtained by projecting or mapping the target precoding matrix onto the first vector set.

Optionally, when the first vector set includes the space-frequency joint vector set $W_1$, the first weighting coefficient is a weighting coefficient $C_1$ obtained by projecting or mapping the target precoding matrix onto the space-frequency joint vector set $W_1$.

Optionally, when the first vector set includes the space domain vector set $W_2$ and the frequency domain vector set $W_3$, the first weighting coefficient is a weighting coefficient $C_1$ obtained by projecting or mapping the target precoding matrix onto the space domain vector set $W_2$ and the frequency domain vector set $W_3$.

Optionally, when the first vector set includes the space domain vector set $W_2$, and the frequency domain vector set $W_3$ is represented by the fourth basis vector set $B_4$, the first weighting coefficient is a weighting coefficient $C_1$ obtained by projecting or mapping the target precoding matrix onto the space domain vector set $W_2$ and the fourth basis vector set $B_4$.

Further, when the first CSI does not report the fourth basis vector set $B_4$, the second CSI may further include indication information corresponding to the fourth basis vector set $B_4$.

Optionally, when the first vector set includes the frequency domain vector set $W_3$, and the space domain vector set $W_2$ is represented by the fifth basis vector set $B_5$, the first weighting coefficient is a weighting coefficient $C_1$ obtained by projecting or mapping the target precoding matrix onto the frequency domain vector set $W_3$ and the fifth basis vector set $B_5$.

Further, when the first CSI does not report the fifth basis vector set $B_5$, the second CSI may further include indication information corresponding to the fifth basis vector set $B_5$.

In a second case, if the terminal device determines that the second CSI corresponds to the subset of the second vector set, the first weighting coefficient is a partial coefficient $C_{11}$ in the weighting coefficient $C_1$ obtained by projecting or mapping the target precoding matrix onto the first vector set. It should be understood that some vectors corresponding to the partial coefficient $C_{11}$ in the first vector set are all vectors included in the subset of the second vector set. The second CSI corresponds to the subset of the second vector set. To be specific, the second CSI determined by the terminal device includes a first weighting coefficient corresponding to some vectors in the second vector set. For example, it is assumed that the second vector set determined by the terminal device includes 20 vectors, and the second CSI includes only a first weighting coefficient corresponding to 10 vectors in the 20 vectors. In this case, it may be considered that the second CSI corresponds to a subset of the second vector set.

Further, when the second CSI includes the first weighting coefficient corresponding to the subset of the second vector set, the second CSI may further include indication information of the subset of the second vector set. The indication information of the subset of the second vector set indicates the subset of the second vector set in the second vector set.

Optionally, when the first vector set includes the space-frequency joint vector set $W_1$, the second vector set is the space-frequency joint vector set $W_1$. The terminal device may obtain the weighting coefficient $C_1$ obtained by projecting or mapping the target precoding matrix onto the space-frequency joint vector set $W_1$, and determine a partial weighting coefficient $C_{11}$ in the weighting coefficient as the first weighting coefficient corresponding to the subset of the second vector set. Some vectors corresponding to the partial weighting coefficient $C_{11}$ in the space-frequency joint vector set $W_1$ are all vectors included in the subset of the second vector set.

Further, the second CSI may further include indication information of the subset of the second vector set. The indication information indicates the subset of the second vector set in the space-frequency joint vector set $W_1$.

Optionally, when the first vector set includes the space domain vector set $W_2$ and the frequency domain vector set $W_3$, the second vector set may include the space domain vector set $W_2$ and the frequency domain vector set $W_3$. The first weighting coefficient is a partial weighting coefficient $C_{12}$ in the weighting coefficient $C_1$ obtained by projecting or mapping the target precoding matrix onto the space domain vector set $W_2$ and the frequency domain vector set $W_3$. Some vectors corresponding to the partial weighting coefficient $C_{12}$ in the space domain vector set $W_2$ are a subset $W_{21}$ of the space domain vector set $W_2$, and some vectors corresponding to the partial weighting coefficient $C_{12}$ in the frequency domain vector set $W_3$ are a subset $W_{31}$ of the frequency domain vector set $W_3$.

Further, the second CSI may further include indication information of the subset of the second vector set. The indication information indicates the subset $W_{21}$ of the space domain vector set $W_2$ in the space-frequency joint vector set $W_2$, and indicates the subset $W_{31}$ of the frequency domain vector set $W_3$ in the frequency domain vector set $W_3$.

Optionally, when the first vector set includes $W_2$ and the frequency domain vector set $W_3$, the second vector set may include the space domain vector set $W_2$ and the frequency domain vector set $W_3$. The first weighting coefficient is a partial weighting coefficient $C_{13}$ in the weighting coefficient $C_1$ obtained by projecting or mapping the target precoding matrix onto the space domain vector set $W_2$ and the frequency domain vector set $W_3$. Some vectors corresponding to the partial weighting coefficient $C_{13}$ in the space domain vector set $W_2$ are a subset $W_{21}$ of the space domain vector set $W_2$, and the partial weighting coefficient $C_{13}$ corresponds to all vectors in the frequency domain vector set $W_3$.

Further, the second CSI may further include indication information of the subset of the second vector set. The indication information indicates the frequency domain vector set $W_3$, and indicates the subset $W_{21}$ of the space domain vector set $W_2$ in the space-frequency joint vector set $W_2$.

Optionally, when the first vector set includes $W_2$ and the frequency domain vector set $W_3$, the second vector set may include the space domain vector set $W_2$ and the frequency domain vector set $W_3$. The first weighting coefficient is a partial weighting coefficient $C_{14}$ in the weighting coefficient $C_1$ obtained by projecting or mapping the target precoding matrix onto the space domain vector set $W_2$ and the frequency domain vector set $W_3$. The partial weighting coefficient $C_{14}$ corresponds to all vectors in the space domain vector set $W_2$, and some vectors corresponding to the partial weighting coefficient $C_{14}$ in the frequency domain vector set $W_3$ are a subset $W_{31}$ of the frequency domain vector set $W_3$.

Further, the second CSI may further include indication information of the subset of the second vector set. The indication information indicates the space-frequency joint vector set $W_2$, and indicates the subset $W_{31}$ in the frequency domain vector set $W_3$.

Optionally, when the first vector set includes the space domain vector set $W_2$, and the frequency domain vector set $W_3$ is represented by the fourth basis vector set $B_4$, the second vector set may include the space domain vector set $W_2$. The first weighting coefficient is a partial weighting coefficient $C_{15}$ in the weighting coefficient $C_1$ obtained by projecting or mapping the target precoding matrix onto the space domain vector set $W_2$ and the fourth basis vector set $B_4$. Some vectors corresponding to the partial weighting coefficient $C_{15}$ in the space domain vector set $W_2$ are a subset $W_{21}$ of the space domain vector set $W_2$, and some vectors corresponding to the partial weighting coefficient $C_{15}$ in the fourth basis vector set $B_4$ are a subset $B_{41}$ of the fourth basis vector set $B_4$.

Further, the second CSI may further include indication information of the subset of the second vector set. The indication information indicates the subset $W_{21}$ of the space domain vector set $W_2$ in the space-frequency joint vector set $W_2$.

Further, the second CSI may further include indication information of the subset $B_{41}$ of the fourth basis vector set $B_4$. The indication information indicates the subset $B_{41}$ in the fourth basis vector set $B_4$.

Optionally, when the first vector set includes the frequency domain vector set $W_3$, and the space domain vector set $W_2$ is represented by the fifth basis vector set $B_5$, the second vector set may include the frequency domain vector set $W_3$. The first weighting coefficient is a partial weighting coefficient $C_{16}$ in the weighting coefficient $C_1$ obtained by projecting or mapping the target precoding matrix onto the fifth basis vector set $B_5$ and the frequency domain vector set $W_3$. Some vectors corresponding to the partial weighting coefficient $C_{16}$ in the frequency domain vector set $W_3$ are a subset $W_{31}$ of the frequency domain vector set $W_3$, and some vectors corresponding to the partial weighting coefficient $C_{16}$ in the fifth basis vector set $B_5$ are a subset $B_{41}$ of the fifth basis vector set $B_4$.

Further, the second CSI may further include indication information of the subset of the second vector set. The indication information indicates the subset $W_{31}$ of the frequency domain vector set $W_3$ in the frequency domain vector set $W_3$.

Further, the second CSI may further include indication information of the subset $B_{51}$ of the fifth basis vector set $B_5$. The indication information indicates the subset $B_{51}$ of the fifth basis vector set $B_5$ in the fifth basis vector set $B_5$.

Scenario 2: The second vector is a subset of the first vector set.

When the second vector set is the subset of the first vector set, the terminal device may determine, based on the measurement result of the second CSI-RS and the first vector set, whether the second CSI corresponds to a universal set of the second vector set or a subset of the second vector set.

In a first case, if the terminal device determines that the second CSI corresponds to the universal set of the second vector set, the first weighting coefficient is a weighting coefficient $C_5$ obtained by projecting or mapping the target precoding matrix onto the subset of the first vector set.

Optionally, when the first vector set includes the space-frequency joint vector set $W_1$, the first weighting coefficient is a weighting coefficient $C_5$ obtained by projecting or mapping the target precoding matrix onto a subset of the space-frequency joint vector set $W_1$.

Optionally, when the first vector set includes the space domain vector set $W_2$ and the frequency domain vector set $W_3$, the first weighting coefficient is a weighting coefficient $C_5$ obtained by projecting or mapping the target precoding matrix onto a subset of the space domain vector set $W_2$ and a subset of the frequency domain vector set $W_3$.

Optionally, when the first vector set includes the space domain vector set $W_2$, and the frequency domain vector set $W_3$ is represented by the fourth basis vector set $B_4$, the first weighting coefficient is a weighting coefficient $C_5$ obtained by projecting or mapping the target precoding matrix onto a subset of the space domain vector set $W_2$ and a subset of the fourth basis vector set $B_4$.

Further, when the first CSI does not report the fourth basis vector set $B_4$, the second CSI may further include indication information corresponding to the fourth basis vector set $B_4$.

Optionally, when the first vector set includes the frequency domain vector set $W_3$, and the space domain vector set $W_2$ is represented by the fifth basis vector set $B_5$, the first weighting coefficient is a weighting coefficient $C_1$ obtained by projecting or mapping the target precoding matrix onto a subset of the frequency domain vector set $W_3$ and a subset of the fifth basis vector set $B_5$.

Further, when the first CSI does not report the fifth basis vector set $B_5$, the second CSI may further include indication information corresponding to the fifth basis vector set $B_5$.

In a second case, if the terminal device determines that the second CSI corresponds to the subset of the second vector set, the first weighting coefficient is a partial coefficient $C_{51}$ in a weighting coefficient $C_5$ obtained by projecting or mapping the target precoding matrix onto the subset of the first vector set. It should be understood that some vectors corresponding to the partial coefficient $C_{51}$ in the subset of the first vector set are all vectors included in the subset of the second vector set.

Further, when the second CSI includes the first weighting coefficient corresponding to the subset of the second vector set, the second CSI may further include indication information of the subset of the second vector set. The indication information of the subset of the second vector set indicates the subset of the second vector set in the second vector set (which is the subset of the first vector set in this case).

Optionally, when the first vector set includes the space-frequency joint vector set $W_1$, the second vector set is a subset of the space-frequency joint vector set $W_1$. The terminal device may obtain a weighting coefficient $C_5$ obtained by projecting or mapping the target precoding matrix onto the subset of the space-frequency joint vector set $W_1$, and determine a partial weighting coefficient $C_{51}$ in the weighting coefficient as the first weighting coefficient corresponding to the subset of the second vector set. Some vectors corresponding to the partial weighting coefficient $C_{51}$ in the subset of the space-frequency joint vector set $W_1$ are all vectors included in the subset of the second vector set.

Further, the second CSI may further include indication information of the subset of the second vector set. The indication information indicates the subset of the second vector set in the subset of the space-frequency joint vector set $W_1$.

Optionally, when the first vector set includes the space domain vector set $W_2$ and the frequency domain vector set $W_3$, the second vector set may include a subset of the space domain vector set $W_2$ and a subset of the frequency domain vector set $W_3$. The first weighting coefficient is a partial weighting coefficient $C_{52}$ in a weighting coefficient $C_5$ obtained by projecting or mapping the target precoding matrix onto the subset of the space domain vector set $W_2$ and the subset of the frequency domain vector set $W_3$. Some vectors corresponding to the partial weighting coefficient $C_{52}$ in the subset of the space domain vector set $W_2$ and some vectors corresponding to the partial weighting coefficient $C_{12}$ in the subset of the frequency domain vector set $W_3$ are all vectors included in the subset of the second vector set.

Further, the second CSI may further include indication information of the subset of the second vector set. The indication information indicates the subset of the second vector set in the subset of the space domain vector set $W_2$ and the subset of the frequency domain vector set $W_3$.

Optionally, when the first vector set includes the space domain vector set $W_2$, and the frequency domain vector set $W_3$ is represented by the fourth basis vector set $B_4$, the subset of the second vector set may include a subset of the space domain vector set $W_2$. The first weighting coefficient is a partial weighting coefficient $C_{53}$ in the weighting coefficient $C_5$ obtained by projecting or mapping the target precoding matrix onto the subset of the space domain vector set $W_2$ and a

subset of the fourth basis vector set $B_4$. Some vectors corresponding to the partial weighting coefficient $C_{53}$ in the subset of the space domain vector set $W_2$ and some vectors corresponding to the partial weighting coefficient $C_{53}$ in the subset of the fourth basis vector set $B_4$ are all vectors included in the subset of the second vector set.

Further, the second CSI may further include indication information of the subset of the second vector set. The indication information indicates the subset of the second vector set in the subset of the space domain vector set $W_2$ and the subset of the fourth basis vector set $B_4$.

Optionally, when the first vector set includes the frequency domain vector set $W_3$, and the space domain vector set $W_2$ is represented by the fifth basis vector set $B_5$, the second vector set may include a subset of the frequency domain vector set $W_3$. The first weighting coefficient is a partial weighting coefficient $C_{54}$ in the weighting coefficient $C_5$ obtained by projecting or mapping the target precoding matrix onto a subset of the fifth basis vector set $B_5$ and the subset of the frequency domain vector set $W_3$. Some vectors corresponding to the partial weighting coefficient $C_{54}$ in the subset of the frequency domain vector set $W_3$ and some vectors corresponding to the partial weighting coefficient $C_{54}$ in the subset of the fifth basis vector set $B_5$ are all vectors included in the subset of the second vector set.

Further, the second CSI may further include indication information of the subset of the second vector set. The indication information indicates the subset of the second vector set in the subset of the frequency domain vector set $W_3$ and the subset of the fifth basis vector set $B_5$.

In some optional implementations, if determining that the time-frequency resource of the first CSI-RS partially or completely overlaps the time-frequency resource of the second CSI-RS, the terminal device may determine the measurement result of the first CSI-RS as the measurement result of the second CSI-RS. In other words, when the terminal device determines that the time-frequency resource of the first CSI-RS partially or completely overlaps the time-frequency resource of the second CSI-RS, the terminal device may determine the second CSI based on the measurement result of the first CSI-RS and the second vector set.

When the time-frequency resource of the first CSI-RS partially or completely overlaps the time-frequency resource of the second CSI-RS, the terminal device cannot receive the second CSI-RS. In the foregoing implementation, the terminal device can still determine the second CSI when the terminal device cannot receive the second CSI-RS, to ensure reliability of the second CSI reporting.

In some feasible implementations, the terminal device and the network device complete a plurality of times of first CSI reporting and a plurality of times of second CSI reporting, and a vector set used in each time of second CSI reporting is determined based on a vector set indicated by one time of first CSI reporting. The second vector set used by the second CSI described above is determined based on the first vector set indicated by the first CSI. Therefore, in a process in which the terminal device completes each time of second CSI reporting, the terminal device needs to first determine specific first CSI reporting, where a vector set indicated by the first CSI reporting is used to implement the current second CSI reporting. In other words, the terminal device needs to determine the first CSI before generating the second CSI, and the network device needs to determine the first CSI after receiving the second CSI. In addition, the second vector set for calculating the second CSI is further determined based on the first vector set indicated by the first CSI.

In addition, during actual implementation, the first CSI may be sent for a plurality of times in a time-division reporting manner. This is because overheads of the indication information of the first vector set included in the first CSI are high, and this disadvantage can be overcome by sending the first CSI for the plurality of times in the time-division reporting manner. FIG. 5 is a diagram of reporting CSI for a plurality of times in a time-division manner according to this application. As shown in FIG. 5, that the first CSI is sent for the plurality of times in the time-division reporting manner may be understood as that the first CSI corresponds to N1 consecutive times of CSI reporting completed by the terminal device before a reporting moment of the second CSI, and the N1 times of CSI reporting correspond to one time of complete first CSI reporting. In other words, after determining the first vector set, the terminal device may decompose the first vector set into N1 vector subsets. Then, the terminal device may perform N1 times of CSI reporting (for ease of differentiation, first CSI sub-reporting is used for description below). Each of the N1 times of first CSI sub-reporting is used to report indication information corresponding to one of the N1 vector subsets. The indication information of the N1 vector subsets corresponding to the N1 times of first CSI sub-reporting forms the indication information that is included in the first CSI and that indicates the first vector set.

It should be understood that, in embodiments of this application, a CSI reporting moment is a moment corresponding to a time domain resource for sending CSI. For example, if the second CSI is sent by the terminal device in a slot i, a reporting moment of the second CSI is a moment corresponding to the slot i.

Certainly, the first CSI may alternatively be reported in a non-time-division reporting manner. In this embodiment of this application, that the first CSI is reported in the non-time-division reporting manner may be understood that the first CSI corresponds to one time of first CSI reporting completed by the terminal device before the reporting moment of the second CSI. In this case, CSI sent in the first CSI reporting completed by the terminal device includes all indication information corresponding to the first vector set.

The following uses the terminal device as an example to describe in detail a process in which the terminal device and the network device determine the first CSI and the second vector set used by the second CSI.

In an optional implementation, when the terminal device sends the first CSI in the non-time-division reporting manner, the second vector set is equivalent to the first vector set, or the second vector set is the universal set of the first vector set. The first CSI corresponds to one time of target first CSI reporting completed by the terminal device before the reporting moment of the second CSI. In addition, the target first CSI reporting is effective CSI reporting, a reporting moment of the first CSI (which may also be understood as a reporting moment corresponding to the target first CSI reporting) is closest to the reporting moment of the second CSI, and an interval between the reporting moments is greater than first duration.

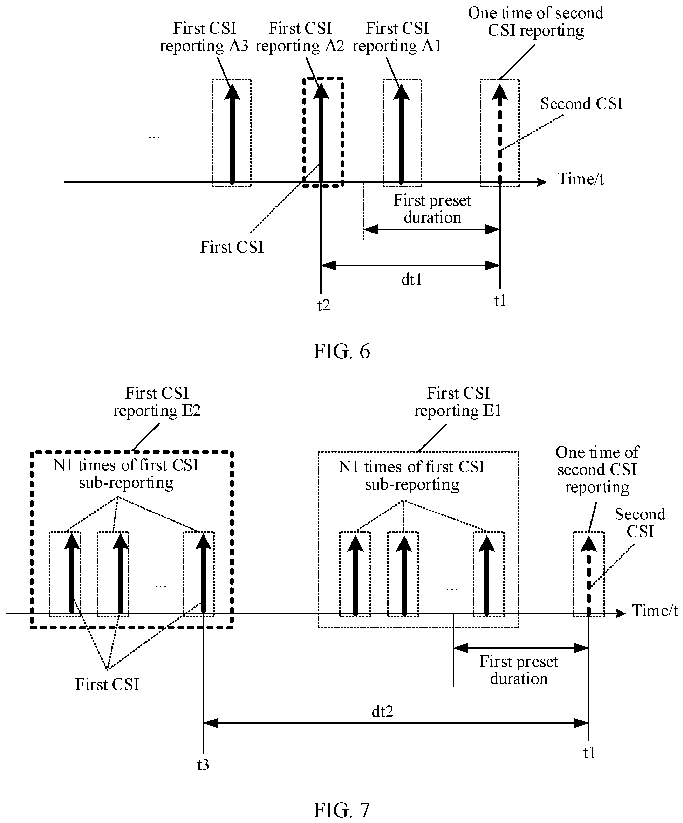

For example, FIG. 6 is a diagram of a CSI reporting time sequence according to this application. As shown in FIG. 6, it is assumed that before a reporting moment t1 of second CSI, the terminal device has completed three times of first CSI reporting: first CSI reporting A1, first CSI reporting A2, and first CSI reporting A3. Because a time interval between a reporting moment of the first CSI reporting A3 and the reporting moment t1 of the second CSI is less than the first duration, the reporting moment of the first CSI reporting A3 is not target first CSI reporting corresponding to the first CSI. In the first CSI reporting A2 and the first CSI reporting A3, a reporting moment corresponding to the first CSI reporting A2 is closer to the reporting moment t1 of the second CSI, and a time interval dt1 between the reporting moment corresponding to the first CSI reporting A2 and the reporting moment t1 of the second CSI is also greater than the first duration. If the terminal device further determines that the first CSI reporting A2 is effective CSI reporting, the terminal device may determine the first CSI reporting A2 as the target first CSI reporting, and CSI reported based on the first CSI reporting A2 is the foregoing first CSI. Further, the terminal device may determine that a vector set indicated by indication information included in the CSI reported based on the first CSI reporting A2 is the foregoing second vector set.

In another optional implementation, when the terminal device sends the first CSI in the time-division reporting manner, the second vector set may be the universal set of the first vector set. The first CSI corresponds to N1 consecutive times of first CSI sub-reporting completed by the terminal device before the reporting moment of the second CSI, and the N1 consecutive times of first CSI sub-reporting correspond to one time of complete first CSI reporting. The N1 consecutive times of first CSI sub-reporting are all effective CSI reporting. A CSI reporting moment corresponding to a last time of first CSI sub-reporting completed in the N1 consecutive times of first CSI sub-reporting is closest to the reporting moment of the second CSI, and an interval between the reporting moments is greater than the first duration. N1 is a positive integer greater than or equal to 2.

For example, FIG. 7 is a diagram of another CSI reporting time sequence according to this application. As shown in FIG. 7, it is assumed that before a reporting moment t1 of second CSI, the terminal device has completed two times of complete first CSI reporting: first CSI reporting E1 and first CSI reporting E2, and the first CSI reporting E1 and the first CSI reporting E2 each includes N1 times of first CSI sub-reporting. Because a time interval between a CSI reporting moment corresponding to a last time of first CSI sub-reporting completed in the first CSI reporting E1 and the second CSI reporting moment t1 is less than the first duration, the terminal device may determine that the first CSI reporting E1 is not one time of complete first CSI reporting associated with second CSI reporting corresponding to the second CSI. Further, the terminal device may determine that a time interval dt2 between a CSI reporting moment t3 corresponding to a last time of first CSI sub-reporting completed in the first CSI reporting E2 and the reporting moment t1 of the second CSI is greater than the first duration, and the moment t3 is closest to the reporting moment t1 of the second CSI. If the terminal device may further determine that the first CSI reporting E2 is effective CSI reporting (that is, the terminal device determines that the N1 times of first CSI sub-reporting corresponding to the first CSI reporting E2 are all effective CSI reporting), the terminal device may determine that the first CSI reporting E2 is one time of complete first CSI reporting associated with the second CSI reporting corresponding to the second CSI, and CSI reported based on the first CSI reporting E2 is the foregoing first CSI, and indication information included in the CSI reported based on the first CSI reporting E2 indicates the foregoing first vector set. Further, the terminal device may determine that a vector set indicated by the indication information included in the CSI reported based on the first CSI reporting E2 is the foregoing second vector set.

In still another optional implementation, when the terminal device sends the first CSI in the time-division reporting manner, the second vector set may be the subset of the first vector set. In other words, the second CSI uses only some vectors in the first vector set indicated by the first CSI. The first CSI corresponds to N1 consecutive times of first CSI sub-reporting completed by the terminal device before the reporting moment of the second CSI. The second vector set is indicated by indication information included in N2 pieces of target CSI corresponding to N2 times of target CSI reporting in the N1 times of CSI sub-reporting. The N2 times of target CSI reporting are all effective CSI reporting. Reporting moments corresponding to the N2 times of target CSI reporting are all before the reporting moment of the second CSI. A CSI reporting moment corresponding to a last time of target CSI reporting completed in the N2 times of target CSI reporting is closest to the reporting moment of the second CSI, and an interval between the reporting moments is greater than the first duration. N1 is a positive integer greater than or equal to 2, and N2 is a positive integer less than or equal to N1.

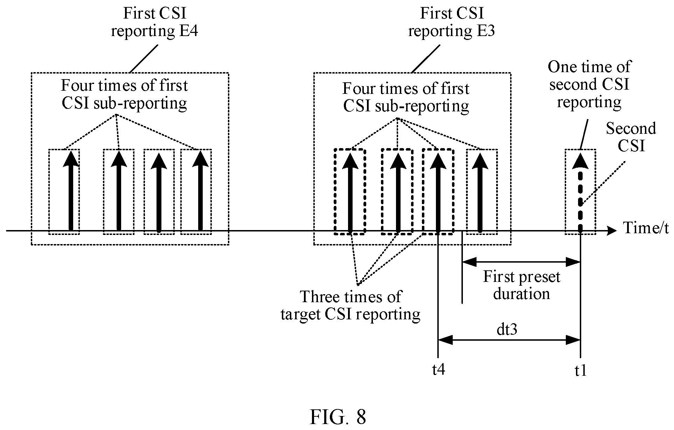

For example, FIG. 8 is a diagram of still another CSI reporting time sequence according to this application. As shown in FIG. 8, it is assumed that before a reporting moment t1 of second CSI, the terminal device has completed two times of complete first CSI reporting: first CSI reporting E3 and first CSI reporting E4, and the first CSI reporting E3 and the first CSI reporting E4 each includes four times of first CSI sub-reporting. Because a CSI reporting moment corresponding to a last time of first CSI sub-reporting completed in the first CSI reporting E4 is not closest to the reporting moment t1 of the second CSI, the terminal device may determine that the first CSI reporting E4 is not one time of complete first CSI reporting associated with second CSI reporting corresponding to the second CSI. Further, the terminal device may determine a CSI reporting moment t3 corresponding to a last time of first CSI sub-reporting completed in the first CSI reporting E3 is closest to the reporting moment t1 of the second CSI. In this case, the terminal device may determine that the first CSI reporting E3 is one time of complete first CSI reporting associated with the second CSI reporting corresponding to the second CSI. Further, because a time interval between the reporting moment of the last time of first CSI sub-reporting in the four times of first CSI sub-reporting included in the first CSI reporting E3 and the reporting moment t1 of the second CSI is less than the first duration, and a time interval dt3 between a reporting moment t4 of a second last time of first CSI sub-reporting included in the first CSI reporting E3 and the reporting moment t1 of the second CSI is greater than the first duration. If the terminal device further determines that first three times of first CSI sub-reporting in the four times of first CSI sub-reporting included in the first CSI reporting E4 are all effective CSI reporting, the terminal device may determine that the first CSI reporting E4 is one time of complete first CSI reporting associated with the second CSI reporting corresponding to the second CSI, and the first three times of first CSI sub-reporting in the first CSI reporting E4 are all target CSI reporting. Further, the terminal device may determine that three vector subsets indicated by three pieces of CSI corresponding to the first three times of first CSI sub-reporting in the first CSI reporting E4 are the foregoing second vector set.

Optionally, the effective CSI reporting is CSI reporting in which the terminal device completes reporting and receives corresponding data new transmission indication information sent by the network device. Alternatively, the effective CSI is CSI reporting in which the terminal device does not receive, within second duration after completing reporting, corresponding data retransmission indication information sent by the network device. It should be understood that the effective CSI reporting may also be represented as an "effective CSI report".

Optionally, the first duration may be an interval between a first moment and the reporting moment of the second CSI, and the first moment is a moment corresponding to a reference resource of the second CSI reporting corresponding to the second CSI.

Alternatively, the first duration may be an interval between a second moment and the reporting moment of the second CSI. The second moment is a moment corresponding to a CSI-RS corresponding to one time of second CSI reporting that is closest to a first moment, and the second moment is before the first moment. The first moment is a moment corresponding to a reference resource of the second CSI reporting corresponding to the second CSI.

It should be additionally noted that, during actual implementation, for each piece of CSI reporting (for example, the first CSI reporting and the second CSI reporting described above), a corresponding CSI-RS is determined by setting fixed time, and a CSI measurement result is reported based on the corresponding CSI-RS. Specifically, a CSI reference resource is defined in new radio (new radio, NR), and indicates time-frequency resources in several slots before a slot in which CSI is reported. The terminal device receives a measurement signal before the CSI reference resource, and reports the CSI measurement result at a time domain position that is of CSI reporting and that is indicated by the network device. In this case, the terminal device needs to complete calculation of the CSI measurement result within an interval (namely, time for calculating the CSI measurement result) between a time domain position of the CSI reference resource and the time domain position of the CSI reporting. The time domain position of the CSI reporting may be a slot in which the terminal device reports (sends) the CSI to the network device. Alternatively, the time domain position of the CSI reporting may further include a subframe for reporting the CSI, a specific symbol in a slot for reporting the CSI, and the like.

S415: The terminal device sends the second CSI to the network device. Correspondingly, the network device receives the second CSI from the terminal device.

In some feasible implementations, after determining the second CSI, the terminal device may send the second CSI to the network device. During specific implementation, the terminal device may send the second CSI to the network device based on second CSI reporting configured by the network device for the terminal device. Correspondingly, the network device may receive the second CSI from the terminal device.

Further, after receiving the first CSI and the second CSI, the network device may determine the target precoding matrix based on the first vector set indicated by the first CSI and the first weighting coefficient indicated by the second CSI.

It should be understood that the second CSI reporting provided in this application is mainly used by the terminal device to report, to the network device, a weighting coefficient corresponding to a vector set that can represent a precoding matrix. Each time the terminal device completes one time of second CSI reporting, that is, reports a weighting coefficient corresponding to a vector set to the network device, the weighting coefficient may be used by the network device to restore a precoding matrix based on the vector set reported in the first CSI. The first CSI and the second CSI are used as an example. The terminal device sends the first CSI to the network device through one time of first CSI reporting, to complete reporting of the first vector set. The terminal device sends the second CSI to the network device through one time of second CSI reporting, to complete reporting of the first weighting coefficient associated with the first vector set. The network device may restore the target precoding matrix with reference to the first vector set reported in the first CSI and the first weighting coefficient reported in the second CSI.

It should be further noted that a specific behavior (a reporting manner, reporting time, and the like) of the second CSI reporting may be determined by CSI reporting configuration information corresponding to the second CSI reporting, and the terminal device may complete each time of second CSI reporting based on the CSI reporting configuration information corresponding to the second CSI reporting.

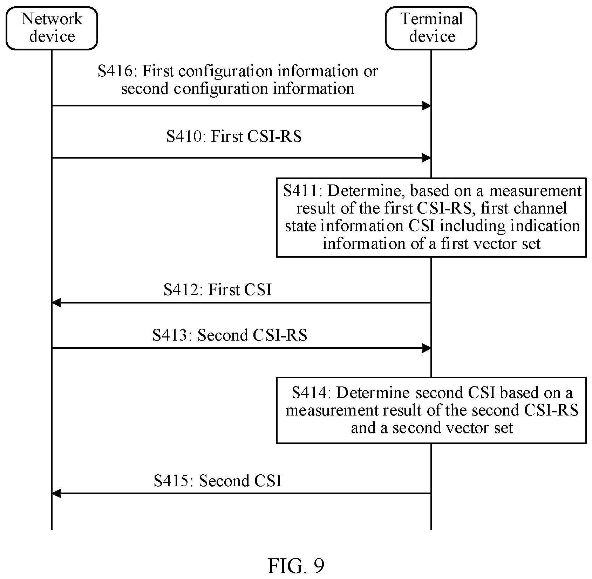

In some feasible implementations, FIG. 9 is another schematic flowchart of a channel state information reporting method according to this application. As shown in FIG. 9, the channel state information reporting method may include the following step.

S416: A network device sends first configuration information or second configuration information to a terminal device. Correspondingly, the terminal device receives the first configuration information or the second configuration information from the network device.

In some feasible implementations, the network device may generate first configuration information or second configuration information corresponding to the foregoing first CSI reporting and second CSI reporting, and send the first configuration information or the second configuration information to the terminal device. Correspondingly, the terminal device may receive the first configuration information or the second configuration information from the network device.

In an optional implementation, when the first configuration information is sent, the first configuration information may include first CSI reporting configuration information and second CSI reporting configuration information associated with the first CSI reporting configuration information. The first CSI reporting configuration information corresponds to a first reporting configuration ID (namely, CSI-ReportConfigId), the second reporting configuration corresponds to a second reporting configuration ID, and the first reporting configuration ID is different from the second reporting configuration ID. The first CSI reporting configuration information is used to indicate or configure the first CSI reporting, and the second CSI reporting configuration information is used to configure or indicate the second CSI reporting.

In the foregoing implementation, the first CSI reporting and the second CSI reporting are indicated or configured for the terminal device by using two pieces of different and associated CSI reporting configuration information. The method is simple and easy to implement, and can reduce implementation difficulty of the channel state information reporting method provided in this application.

Optionally, an association identifier may be set in each of the first CSI reporting configuration information and the second CSI reporting configuration information, to indicate that the first CSI reporting configuration information is associated with the second CSI reporting configuration information. For example, the first CSI reporting configuration information may include an association identifier indicating the second reporting configuration ID, and the second CSI reporting configuration information includes an association identifier indicating the first reporting configuration ID.

Optionally, an association identifier may be set only in the second CSI reporting configuration information to indicate that the second CSI reporting configuration information is associated with the first CSI reporting configuration information. For example, the second CSI reporting configuration information may include only an association identifier indicating the first reporting configuration ID.

It should be understood that another implementation may alternatively indicate that the first CSI reporting configuration information is associated with the second CSI reporting configuration information. This is not specifically limited in this application.

In a second optional implementation, when the second configuration information is sent, the second configuration information may include first CSI sub-reporting configuration information and second CSI sub-reporting configuration information. The first CSI sub-reporting configuration information indicates the first CSI reporting, and the second CSI reporting configuration information indicates the second CSI reporting. The first CSI sub-reporting configuration information and the second CSI sub-reporting configuration information correspond to a third CSI reporting configuration ID, and the third CSI reporting configuration ID is a CSI reporting configuration ID corresponding to the second configuration information.

In the foregoing implementation, the first CSI reporting and the second CSI reporting are indicated or configured for the terminal device by using one piece of CSI reporting configuration information, so that communication resources of a communication system can be saved.

It should be understood that a CSI reporting type (namely, reportConfigType) of the first CSI reporting provided in this application may be periodic, aperiodic, or semi-persistent. Similarly, a reporting type of the second CSI reporting provided in this application may also be periodic, aperiodic, or semi-persistent.

In an optional implementation, when the CSI reporting types corresponding to the first CSI reporting and the second CSI reporting are both periodic or semi-persistent, a CSI reporting periodicity corresponding to the first CSI reporting may be greater than a CSI reporting periodicity corresponding to the second CSI reporting.

First CSI reports indication information of a first vector set, the first vector set describes a statistical feature of a channel in a domain (for example, a space domain, a frequency domain, or a space-frequency joint domain), and the first CSI changes slowly. Therefore, the first CSI does not need to be frequently reported. Therefore, in the foregoing implementation, the CSI reporting periodicity corresponding to the first CSI reporting is set to be longer, so that a quantity of times of first CSI reporting can be reduced, to save communication resources.

In another optional implementation, when the CSI reporting types corresponding to the first CSI reporting and the second CSI reporting are both aperiodic, a CSI reporting interval corresponding to the first CSI reporting may be greater than a CSI reporting interval corresponding to the second CSI reporting. It should be understood that, in embodiments of this application, a CSI reporting interval corresponding to CSI reporting is a time interval at which the terminal device completes two times of CSI reporting. For example, the terminal device completes one time of first CSI reporting at a moment t1, completes one time of first CSI reporting at a moment t2, and also completes one time of first CSI reporting at a moment t3. In this case, a difference between the moment t1 and the moment t2 is a CSI reporting interval of the first CSI reporting, and a difference between the moment t2 and the moment t3 is another CSI reporting interval of the first CSI reporting. It should be understood that one piece of CSI reporting may correspond to a plurality of CSI reporting intervals, and some of the plurality of CSI reporting intervals corresponding to the CSI reporting may be the same. Based on this, that the CSI reporting interval corresponding to the first CSI reporting is greater than the CSI reporting interval corresponding to the second CSI reporting may be understood as that a part or all of all CSI reporting intervals corresponding to the first CSI reporting are greater than all CSI reporting intervals corresponding to the second CSI reporting.

First CSI reports indication information of a first vector set, the first vector set describes a statistical feature of a channel in a domain (for example, a space domain, a frequency domain, or a space-frequency joint domain), and the first CSI changes slowly. Therefore, the first CSI does not need to be frequently reported. Therefore, in the foregoing implementation, the CSI reporting interval corresponding to the first CSI reporting is set to be longer, so that a quantity of times of first CSI reporting can be reduced, to save communication resources.

Further, a CSI-RS (including the first CSI-RS described above) corresponding to the first CSI reporting and a CSI-RS (including the second CSI-RS described above) corresponding to the second CSI reporting have a same quasi co-location relationship. Alternatively, the CSI-RS corresponding to the second CSI reporting may be quasi co-located to the CSI-RS corresponding to the first CSI reporting.

In some feasible implementations, some other configuration items corresponding to the first CSI reporting may also be the same as or different from those corresponding to the second CSI reporting.

Optionally, reporting content (namely, a report quantity) corresponding to the first CSI reporting is different from that corresponding to the second CSI reporting.

Optionally, the CSI reporting types corresponding to the first CSI reporting and the second CSI reporting are the same or different. In other words, values of objects reportConfigType in CSI-ReportConfig IEs corresponding to the first CSI reporting and the second CSI reporting are different or the same. For example, the CSI reporting type of the first CSI reporting may be periodic, and the CSI reporting type of the second CSI reporting may be aperiodic. Alternatively, the CSI reporting types of the first CSI reporting and the second CSI reporting may both be semi-persistent.

Further, when the CSI reporting types corresponding to the first CSI reporting and the second CSI reporting are periodic or semi-persistent, the reporting periodicities corresponding to the first CSI reporting and the second CSI reporting are different, and start offsets of the reporting periodicities corresponding to the first CSI reporting and the second CSI reporting may be different or the same. In other words, values of objects CSI-ReportPeriodicityAndOffset in the CSI-ReportConfig IEs corresponding to the first CSI reporting and the second CSI reporting are different, but values of objects that indicate the start offsets and that are included in the objects CSI-ReportPeriodicityAndOffset may be the same or different. For example, the reporting periodicity of the first CSI reporting may be 50 ms, and the start offset may be 5 ms. The reporting periodicity of the second CSI reporting may be 5 ms, and the start offset may be 1 ms.

Optionally, CSI-RS resource types corresponding to the first CSI reporting and the second CSI reporting are the same or different. In other words, values of CSI-RS resource types (namely, resourceType) included in nzp-CSI-RS-ResourceSetList in CSI resource configurations (namely, CSI-ResourceConfig) corresponding to the first CSI reporting and the second CSI reporting are the same or different. In embodiments of this application, the CSI-RS resource type may include periodic, semi-periodic, or semi-persistent. For example, the CSI-RS resource types corresponding to the first CSI reporting and the second CSI reporting may both be periodic. Alternatively, the CSI-RS resource type corresponding to the first CSI reporting is semi-persistent, and the CSI-RS resource type corresponding to the second CSI reporting is aperiodic.

Further, when the CSI-RS resource types corresponding to the first CSI reporting and the second CSI reporting are periodic or semi-persistent, a periodicity of a CSI-RS resource corresponding to the first CSI reporting is the same as or different from a periodicity of a CSI-RS resource corresponding to the second CSI reporting, and a start offset of the periodicity of the CSI-RS resource corresponding to the first CSI reporting is the same as or different from a start offset of the periodicity of the CSI-RS resource corresponding to the second CSI reporting. For example, the periodicity of the CSI-RS resource corresponding to the first CSI reporting may be 40 ms, and the start offset may be 5 ms. The periodicity of the CSI-RS resource corresponding to the second CSI reporting may be 4 ms, and the start offset may be 2 ms.

Optionally, quantities of CSI-RS resources corresponding to the first CSI reporting and the second CSI reporting are the same or different. In other words, in CSI-RS resource set configurations (namely, NZP-CSI-RS-ResourceSet) for channel measurement corresponding to the first CSI reporting and the second CSI reporting, quantities of corresponding CSI-RS resources may be different or the same. For example, the quantities of CSI-RS resources corresponding to the first CSI reporting and the second CSI reporting may be both 1. Alternatively, the quantity of CSI-RS resources corresponding to the first CSI reporting is 4, and the quantity of CSI-RS resources corresponding to the second CSI reporting is 1.

Optionally, CSI-RS resource mapping corresponding to the first CSI reporting is the same or different from that corresponding to the second CSI reporting. In other words, resourceMapping in an NZP-CSI-RS-Resource corresponding to the first CSI reporting is different from or the same as that corresponding to the second CSI reporting. This is because the CSI corresponding to the second CSI reporting is calculated based on the CSI corresponding to the first CSI reporting. When a terminal device side obtains prior information, a CSI-RS time-frequency or frequency-domain resource configuration corresponding to the second CSI reporting may be more sparse, and fewer time-frequency resources are occupied. In this way, pilot overheads can be reduced.

Herein, that the CSI-RS resource mapping corresponding to the first CSI reporting is the same or different from that corresponding to the second CSI reporting may be understood as follows: At least one of configuration items such as a time-domain mapping position, a frequency-domain mapping position, a quantity of CSI-RS ports, a CDM group type, and CSI-RS density that are of the CSI-RS corresponding to the first CSI reporting is the same as or different from at least one of configuration items such as a time-domain mapping position, a frequency-domain mapping position, a CSI-RS port quantity, a CDM group type, and CSI-RS density that are of the CSI-RS corresponding to the first CSI reporting.

It should be noted that the foregoing merely describes, by way of example, that some configuration items corresponding to the first CSI reporting are different from those corresponding to the second CSI reporting. During actual implementation, some other configuration items corresponding to the first CSI reporting may also be the same as or different from those corresponding to the second CSI reporting. This is not specifically limited herein.

In the foregoing implementation, the some configuration items corresponding to the first CSI reporting may be the same as or different from those corresponding to the second CSI reporting. In this way, it can be ensured that two pieces of CSI reporting and CSI resource configurations can be more flexible, and applicability and practicability of the channel state information reporting method provided in this application can be improved.

In some feasible implementations, when the reporting types corresponding to the first CSI reporting and the second CSI reporting are semi-persistent or aperiodic, the network device needs to trigger the terminal device to perform the first CSI reporting and the second CSI reporting. The following describes in detail a reporting triggering process of the first CSI reporting and the second CSI reporting with reference to two different cases in which the first configuration information is sent (corresponding to the following configuration information implementation 1) and the second configuration information is sent (corresponding to the following configuration information implementation 2).

Configuration information implementation 1:

When the CSI reporting types corresponding to the first CSI reporting and the second CSI reporting are both semi-persistent, a semi-persistent CSI trigger state list includes a first semi-persistent CSI trigger state corresponding to the first CSI reporting configuration information and a second semi-persistent trigger state corresponding to the second CSI reporting configuration information. It should be noted that, during actual implementation, the network device configures a semi-persistent CSI trigger state list for the terminal device, and the semi-persistent CSI trigger state list includes a semi-persistent trigger state corresponding to at least one piece of CSI reporting configuration information indicating that a CSI reporting type is semi-persistent.

When the CSI reporting types corresponding to the first CSI reporting and the second CSI reporting are both aperiodic, an aperiodic CSI trigger state list includes a first aperiodic CSI trigger state corresponding to the first CSI reporting configuration information and a second aperiodic trigger state corresponding to the second CSI reporting configuration information. It should be noted that, during actual implementation, the network device configures an aperiodic CSI trigger state list for the terminal device, and the aperiodic CSI trigger state list includes a semi-persistent trigger state corresponding to at least one piece of CSI reporting configuration information indicating that a CSI reporting type is aperiodic.

When the CSI reporting type corresponding to the first CSI reporting is semi-persistent and the CSI reporting type corresponding to the second CSI reporting is aperiodic, a semi-persistent CSI trigger state list includes a first semi-persistent CSI trigger state corresponding to the first CSI reporting configuration information, and an aperiodic CSI trigger state list includes a second aperiodic trigger state corresponding to the second CSI reporting configuration information.

When the CSI reporting type corresponding to the first-type CSI reporting is aperiodic and the CSI reporting type corresponding to the second-type CSI reporting is semi-persistent, a semi-persistent CSI trigger state list includes a second semi-persistent CSI trigger state corresponding to the second CSI reporting configuration information, and an aperiodic CSI trigger state list includes a first aperiodic trigger state corresponding to the first CSI reporting configuration information.

The first semi-persistent CSI trigger state and the first aperiodic CSI trigger state are both associated with the first reporting configuration ID, and the second semi-persistent CSI trigger state and the second aperiodic CSI trigger state are both associated with the second reporting configuration ID.

Further, based on the foregoing implementations, when the reporting trigger message sent by the network device and received by the terminal device indicates to trigger the first aperiodic CSI trigger state or the first semi-persistent CSI trigger state, the reporting trigger message is used to trigger the first-type CSI reporting. When the reporting trigger message received by the terminal device indicates to trigger the second aperiodic CSI trigger state or the second semi-persistent CSI trigger state, the reporting trigger message is used to trigger the second-type CSI reporting.

In other words, before step S410, the network device may send the reporting trigger message to the terminal device. If determining that the reporting trigger message indicates to trigger the first aperiodic CSI trigger state or the first semi-persistent CSI trigger state, the terminal device determines that the first-type CSI reporting is triggered. If determining that the reporting trigger message indicates to trigger the second aperiodic CSI trigger state or the second semi-persistent CSI trigger state, the terminal device determines that the second-type CSI reporting is triggered.

It should be understood that, during actual implementation, the reporting trigger message may include only one of the first aperiodic CSI trigger state, the first semi-persistent CSI trigger state, the second aperiodic CSI trigger state, or the second semi-persistent CSI trigger state, or may include two of the first aperiodic CSI trigger state, the first semi-persistent CSI trigger state, the second aperiodic CSI trigger state, or the second semi-persistent CSI trigger state. That is, the reporting trigger message may be used to trigger only the first CSI reporting or the second CSI reporting, or may be used to trigger both the first CSI reporting and the second CSI reporting.

Configuration information implementation 2:

In an optional implementation, when the CSI reporting types corresponding to the first CSI reporting and the second CSI reporting are both aperiodic, an aperiodic CSI trigger state list may include a first aperiodic CSI trigger state corresponding to the first CSI sub-reporting configuration information and a second aperiodic CSI trigger state corresponding to the second CSI sub-reporting configuration information.

When the CSI reporting types corresponding to the first CSI reporting and the second CSI reporting are both semi-persistent, a semi-persistent CSI trigger state list may include a first semi-persistent CSI trigger state corresponding to the first CSI sub-reporting configuration information and a second semi-persistent CSI trigger state corresponding to the second CSI sub-reporting configuration information.

Herein, a third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

Further, when the foregoing implementations are used, when the reporting trigger message sent by the network device and received by the terminal device indicates to trigger the first aperiodic CSI trigger state or the first semi-persistent CSI trigger state, the reporting trigger message is used to trigger the first-type CSI reporting. When the reporting trigger message received by the terminal device indicates to trigger the second aperiodic CSI trigger state or the second semi-persistent CSI trigger state, the reporting trigger message is used to trigger the second-type CSI reporting.

In other words, before step S410, the network device may send the reporting trigger message to the terminal device. If determining that the reporting trigger message indicates to trigger the first aperiodic CSI trigger state or the first semi-persistent CSI trigger state, the terminal device determines that the first-type CSI reporting is triggered. If determining that the reporting trigger message indicates to trigger the second aperiodic CSI trigger state or the second semi-persistent CSI trigger state, the terminal device determines that the second-type CSI reporting is triggered.

It should be understood that, during actual implementation, the reporting trigger message may include only one of the first aperiodic CSI trigger state, the first semi-persistent CSI trigger state, the second aperiodic CSI trigger state, or the second semi-persistent CSI trigger state, or may include two of the first aperiodic CSI trigger state, the first semi-persistent CSI trigger state, the second aperiodic CSI trigger state, or the second semi-persistent CSI trigger state. That is, the reporting trigger message may be used to trigger only the first CSI reporting or the second CSI reporting, or may be used to trigger both the first CSI reporting and the second CSI reporting.

In another optional implementation, when the CSI reporting types corresponding to the first CSI reporting and the second CSI reporting are both aperiodic, an aperiodic CSI trigger state list includes a target aperiodic CSI trigger state corresponding to the second configuration information. When the CSI reporting types corresponding to the first CSI reporting and the second CSI reporting are both semi-persistent, a semi-persistent CSI trigger state list may include a target semi-persistent CSI trigger state corresponding to the second configuration information. Herein, the target aperiodic CSI trigger state and the target semi-persistent trigger state are both associated with a third reporting configuration ID, and the third reporting configuration ID is a reporting configuration ID corresponding to the second configuration information.

Further, based on the foregoing implementations, when a reporting trigger message received by the terminal device indicates to trigger the target aperiodic CSI trigger state and includes identification information indicating the first CSI reporting, or when the reporting trigger message received by the terminal device indicates to trigger the target semi-persistent CSI trigger state and includes the identification information indicating the first CSI reporting, the reporting trigger message is used to trigger the first CSI reporting. When the reporting trigger message received by the terminal device indicates to trigger the target aperiodic CSI trigger state and includes identification information indicating the second CSI reporting, or when the reporting trigger message received by the terminal device indicates to trigger the target semi-persistent CSI trigger state and includes the identification information indicating the second CSI reporting, the reporting trigger message is used to trigger the second CSI reporting.

For example, the identification information indicating the first CSI reporting and the identification information indicating the second CSI reporting may be a specific bit included in the reporting trigger message. When a value of the bit is 1, it indicates the first CSI reporting; or when a value of the bit is 0, it indicates the second CSI reporting. It should be understood that this is merely an example, and the identification information indicating the first CSI reporting and the identification information indicating the second CSI reporting may alternatively be implemented in the reporting trigger message in another manner. This is not limited herein.

For example, the identification information indicating the first CSI reporting may be a specific bit (for ease of differentiation, a first bit is used for description below) included in the reporting trigger message. A value of the first bit indicates whether to trigger the first CSI reporting. For example, when the value of the first bit is 1, it indicates to trigger the first CSI reporting; or when the value of the bit is 0, it indicates not to trigger the first CSI reporting. Similarly, the identification information indicating the second CSI reporting may be another specific bit (for ease of differentiation, a second bit is used for description below) included in the reporting trigger message. A value of the second bit indicates whether to trigger the second CSI reporting. For example, when the value of the second bit is 1, it indicates to trigger the second CSI reporting; or when the value of the bit is 0, it indicates not to trigger the second CSI reporting.

**In** still another optional implementation, when the reporting type of the first CSI reporting is semi-persistent and the reporting type of the second CSI reporting is aperiodic, a semi-persistent CSI trigger state list includes a first semi-persistent CSI trigger state corresponding to the first CSI sub-reporting configuration information, and an aperiodic CSI trigger state list includes a second aperiodic CSI trigger state corresponding to the second CSI sub-reporting configuration information.

When the reporting type of the first CSI reporting is aperiodic and the reporting type of the second CSI reporting is semi-persistent, a semi-persistent CSI trigger state list includes a second semi-persistent CSI trigger state corresponding to the second CSI sub-reporting configuration information, and an aperiodic CSI trigger state list includes a first aperiodic CSI trigger state corresponding to the first CSI sub-reporting configuration information.

Herein, the first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

Further, based on the foregoing implementations, when the reporting trigger message sent by the network device and received by the terminal device indicates to trigger the first aperiodic CSI trigger state or the first semi-persistent CSI trigger state, the reporting trigger message is used to trigger the first-type CSI reporting. When the reporting trigger message received by the terminal device indicates to trigger the second aperiodic CSI trigger state or the second semi-persistent CSI trigger state, the reporting trigger message is used to trigger the second-type CSI reporting.

In other words, before step S410, the network device may send the reporting trigger message to the terminal device. If determining that the reporting trigger message indicates to trigger the first aperiodic CSI trigger state or the first semi-persistent CSI trigger state, the terminal device determines that the first-type CSI reporting is triggered. If determining that the reporting trigger message indicates to trigger the second aperiodic CSI trigger state or the second semi-persistent CSI trigger state, the terminal device determines that the second-type CSI reporting is triggered.

It should be understood that, during actual implementation, the reporting trigger message may include only one of the first aperiodic CSI trigger state, the first semi-persistent CSI trigger state, the second aperiodic CSI trigger state, or the second semi-persistent CSI trigger state, or may include two of the first aperiodic CSI trigger state, the first semi-persistent CSI trigger state, the second aperiodic CSI trigger state, or the second semi-persistent CSI trigger state. That is, the reporting trigger message may be used to trigger only the first CSI reporting or the second CSI reporting, or may be used to trigger both the first CSI reporting and the second CSI reporting.

In the channel state information reporting method provided in this application, the indication information of the first vector set used to determine the target precoding matrix is reported through the first CSI, and the first weighting coefficient used to determine the target precoding matrix is reported through the second CSI that is independent of the first CSI. The indication information and the weighting coefficient that correspond to the precoding matrix are reported independently. This can effectively resolve an existing problem of high overheads of CSI reporting for reporting a precoding matrix or a downlink channel, and facilitates efficient use of communication resources of a communication system.

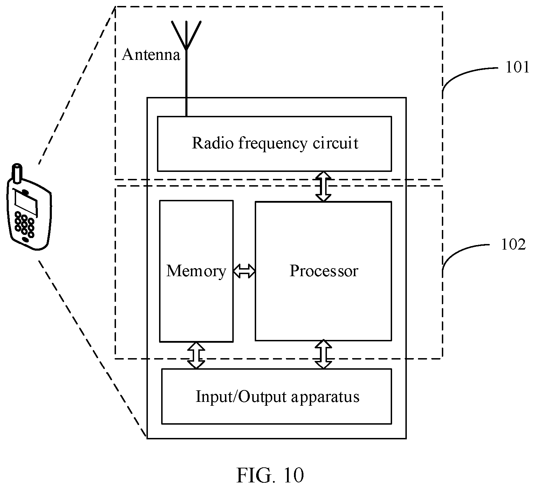

The foregoing describes in detail the method in embodiments of this application with reference to FIG. 1 to FIG. 9. The following describes in detail a communication apparatus in this application with reference to FIG. 10 to FIG. 12.

FIG. 10 is a diagram of a structure of a communication apparatus according to this application. The communication apparatus may be the terminal device in the foregoing Instance 1, or may be an internal element or module of the terminal device.

The communication apparatus may include one or more transceiver units 101 and one or more processing units 102. The transceiver unit 101 may be referred to as a transceiver machine, a transceiver circuit, a transceiver, or the like, and may include at least one antenna and a radio frequency unit. The transceiver unit 101 is mainly configured to: receive and send a radio frequency signal, and perform conversion between the radio frequency signal and a baseband signal, for example, configured to receive indication information from a network apparatus. The processing unit 102 is mainly configured to: perform baseband processing, control the communication apparatus, and the like. The transceiver unit 101 and the processing unit 102 may be physically disposed together, or may be physically disposed separately, namely, distributed apparatuses. During specific implementation, the transceiver unit 101 may include one or more boards. A plurality of boards may jointly support a radio access network of a single access standard, or may support radio access networks of different access standards. The processing unit 102 further includes a memory and a processor. The memory is configured to store necessary instructions and data. The processor is configured to control the communication apparatus to perform a necessary action. For example, the processor is configured to control the communication apparatus to perform a related operation procedure of the terminal device in Embodiment 1. The memory and the processor may serve one or more boards. In other words, a memory and a processor may be disposed on each board. Alternatively, a plurality of boards may share a same memory and a same processor. In addition, a necessary circuit may further be disposed on each board.

During specific implementation, the transceiver unit 101 is configured to receive a first channel state information reference signal CSI-RS sent by a network device, and the processing unit 102 is configured to determine first CSI based on a measurement result of the first CSI-RS. The transceiver unit 101 is configured to send the first channel state information CSI to the network device. The first CSI includes indication information of a first vector set used to determine a target precoding matrix, and the first vector set includes at least one of a space domain vector set and a frequency domain vector set, or includes a space-frequency joint vector set. The transceiver unit 101 is further configured to receive a second CSI-RS sent by the network device, and the processing unit 102 is further configured to determine second CSI based on a measurement result of the second CSI-RS and a second vector set. The transceiver unit 101 is further configured to send the second CSI to the network device. The second CSI includes a first weighting coefficient corresponding to a universal set or a subset of the second vector set, the second vector set is a universal set or a subset of the first vector set, and the first weighting coefficient and the second vector set are used to determine the target precoding matrix.

It should be understood that, for other possible functions of the transceiver unit 101 and the processing unit 102, refer to the steps of the channel state information reporting method implemented by the terminal device in the foregoing embodiments. Details are not described herein again.

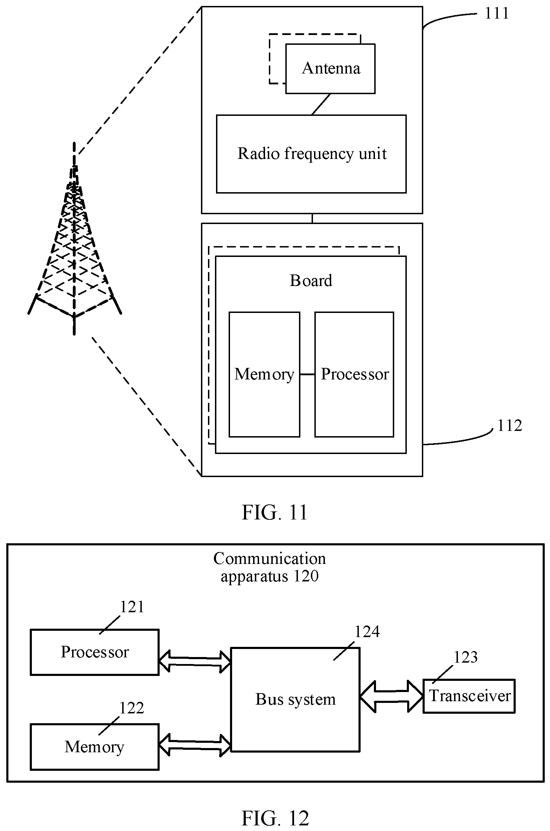

FIG. 11 is a diagram of a structure of another communication apparatus according to this application. The communication apparatus may be configured to perform functions of the network device in Embodiment 2. The communication apparatus may be a network apparatus, or may be an element or a module in the communication apparatus. For ease of description, FIG. 11 shows only main parts of the communication apparatus. It can be learned from FIG. 11 that the communication apparatus includes modules such as a processor, a memory, a radio frequency circuit, and an antenna. The processor is mainly configured to: process a communication protocol and communication data, and control the communication apparatus to execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave.

When data needs to be sent, after performing baseband processing on the to-be-sent data, the processor outputs a baseband signal to the radio frequency circuit; and the radio frequency circuit performs radio frequency processing on the baseband signal and sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual apparatus product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna having receiving and sending functions and the radio frequency circuit may be considered as a transceiver unit of the communication apparatus, and the processor having a processing function may be considered as a processing unit of the communication apparatus. As shown in FIG. 11, the communication apparatus includes a transceiver unit 111 and a processing unit 112. Optionally, a component that is in the transceiver unit 111 and that is configured to implement the receiving function may be considered as a receiving unit, and a component that is in the transceiver unit 111 and that is configured to implement the sending function may be considered as a sending unit. That is, the transceiver unit 111 includes the receiving unit and the sending unit. Herein, the receiving unit sometimes may also be referred to as a receiver machine, a receiver, a receiver circuit, or the like. The sending unit sometimes may also be referred to as a transmitter machine, a transmitter, a transmit circuit, or the like.

During specific implementation, the processing unit 112 is configured to generate a first channel state information reference signal CSI-RS, and the transceiver unit 111 is configured to send the first CSI-RS to a terminal device. The transceiver unit 111 is further configured to receive first channel state information from the terminal device. The first CSI is obtained by the terminal device based on a measurement result of the first CSI-RS, the first CSI includes indication information of a first vector set used to determine a target precoding matrix, and the first vector set includes at least one of a space domain vector set and a frequency domain vector set, or includes a space-frequency joint vector set. The processing unit 112 is further configured to generate a second CSI-RS. The transceiver unit 111 is further configured to send the second CSI-RS to the terminal device. The transceiver unit 111 is further configured to receive second CSI sent by the terminal device. The second CSI is obtained by the terminal device based on a measurement result of the second CSI-RS and a second vector set, the second CSI includes a first weighting coefficient corresponding to a universal set or a subset of the second vector set, the second vector set is a universal set or a subset of the first vector set, and the first weighting coefficient and the second vector set are used to determine the target precoding matrix.

It should be understood that, for other possible functions of the transceiver unit 111 and the processing unit 112, refer to the steps of the channel state information reporting method implemented by the terminal device in the foregoing embodiments. Details are not described herein again.

FIG. 12 is a diagram of a structure of still another communication apparatus according to this application. The communication apparatus 120 may be configured to implement an operation performed by the terminal device in the foregoing embodiments, or the communication apparatus 120 may be the terminal device described above. The communication apparatus 120 includes a processor 121, a memory 122, and a bus system 124.

The memory 122 includes but is not limited to a RAM, a ROM, an EPROM, or a CD-ROM. The memory 122 is configured to store related instructions and data. The memory 122 stores the following elements: an executable module or a data structure, or a subset thereof, or an extended set thereof;

operation instructions, including various operation instructions and used to implement various operations; and
an operating system, including various system programs and configured to implement various basic services and process a hardware-based task.

Only one memory is shown in FIG. 12. Certainly, a plurality of memories may be disposed as needed.

The apparatus may further include a transceiver 123. The transceiver 123 may be a communication module or a transceiver circuit. In this embodiment of this application, the transceiver 123 is configured to perform operations such as information receiving in the foregoing embodiments.

The processor 121 may be a controller, a CPU, a general-purpose processor, a DSP, an ASIC, an FPGA, or another programmable logic device, a transistor logic device, a hardware component, or any combination thereof. Alternatively, the processor 121 may be a combination for implementing a computing function, for example, a combination including one or more microprocessors, or a combination of the DSP and a microprocessor.

During specific application, components of the communication apparatus 120 are coupled together through the bus system 124. In addition to a data bus, the bus system 124 may include a power supply bus, a control bus, a status signal bus, and the like. However, for clear description, various types of buses in FIG. 12 are marked as the bus system 124. For ease of illustration, FIG. 12 shows only an example.

During specific implementation, the communication apparatus 120 may perform the steps of the method performed by the terminal device in the foregoing embodiments. Specifically, when the communication apparatus 120 is configured to implement the steps performed by the terminal device in the channel state information reporting method provided in embodiments, the processor 121 may be configured to implement a function of the processing unit 102, and the transceiver 123 may be configured to implement a function of the transceiver unit 101.

Still refer to FIG. 12. The communication apparatus 120 may be further configured to implement an operation performed by the network device in the foregoing embodiment. Alternatively, the communication apparatus 120 may be the network device described above.

During specific implementation, when the communication apparatus 120 is configured to implement the steps performed by the network device in the channel state information reporting method provided in embodiments, the processor 121 may be configured to implement a function of the processing unit 112, and the transceiver 123 may be configured to implement a function of the transceiver unit 111.

It should be noted that, during actual application, the processor in this embodiment of this application may be an integrated circuit chip, and has a signal processing capability. In an implementation process, steps in the foregoing method embodiments can be completed by using a hardware integrated logic circuit in the processor, or by using instructions in a form of software. The processor may be a general-purpose processor, a digital signal processor (digital signal Processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in embodiments of this application aims to include but is not limited to these memories and any memory of another proper type.

This application further provides a communication system, including one or more network devices described above and one or more terminal devices described above.

This application further provides a computer-readable medium. The computer-readable medium stores a computer program. When the computer program is executed by a computer, the steps of the channel state information reporting method performed by the terminal device in the foregoing embodiments are implemented.

This application further provides a computer program product. When the computer program product is executed by a computer, the steps of the channel state information reporting method performed by the network device in the foregoing embodiments are implemented.

This application further provides a communication apparatus, including a processor and an interface. The processor is configured to implement the steps of the channel state information reporting method performed by the terminal device or the network device in the foregoing embodiments. It should be understood that the communication apparatus may be a chip, and the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. The memory may be integrated into the processor, or may be located outside the processor and exist independently.

This application further provides a chip system. The chip system includes a processor, configured to support an apparatus in which the chip system is mounted in implementing the channel state information reporting method performed by the terminal device or the network device, for example, generating or processing data and/or information in the foregoing method. In a possible design, the chip system further includes a memory. The memory is configured to store program instructions and data that are necessary for a data sending device. The chip system may include a chip, or may include the chip and another discrete component.

All or a part of the foregoing method embodiments may be implemented by using software, hardware, firmware, or any combination thereof. When the software is used for implementation, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" usually represents an "or" relationship between the associated objects. In the formulas in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

**Claims**

1. A channel state information reporting method, wherein the method is applied to a terminal device, and the method comprises:

   receiving a first channel state information reference signal CSI-RS from a network device;
   sending first channel state information CSI to the network device, wherein the first CSI is obtained based on a measurement result of the first CSI-RS, the first CSI comprises indication information of a first vector set used to determine a target precoding matrix, and the first vector set comprises at least one of a space domain vector set and a frequency domain vector set, or comprises a space-frequency joint vector set;
   receiving a second CSI-RS from the network device; and
   sending second CSI to the network device, wherein the second CSI is obtained based on a measurement result of the second CSI-RS and a second vector set, the second CSI comprises a first weighting coefficient corresponding to a universal set or a subset of the second vector set, the second vector set is a universal set or a subset of the first vector set, and the first weighting coefficient and the second vector set are used to determine the target precoding matrix.

2. The method according to claim 1, wherein when CSI reporting types corresponding to first CSI reporting for reporting the first CSI and second CSI reporting for reporting the second CSI are periodic or semi-persistent, a CSI reporting periodicity corresponding to the first CSI reporting is greater than a CSI reporting periodicity corresponding to the second CSI reporting.

3. The method according to claim 1 or 2, wherein a CSI-RS corresponding to the first CSI reporting and a CSI-RS corresponding to the second CSI reporting have a same quasi-co-location relationship, or the CSI-RS corresponding to the second CSI reporting is quasi-co-located with the CSI-RS corresponding to the first CSI reporting.

4. The method according to any one of claims 1 to 3, wherein the method further comprises:
   receiving first configuration information from the network device, wherein the first configuration information comprises first CSI reporting configuration information and second CSI reporting configuration information associated with the first CSI reporting configuration information, the first CSI reporting configuration information corresponds to a first reporting configuration ID, the second reporting configuration corresponds to a second reporting configuration ID, the first reporting configuration ID is different from the second reporting configuration ID, and the first CSI reporting configuration information and the second CSI reporting configuration information are respectively used to configure the first CSI reporting and the second CSI reporting.

5. The method according to claim 4, wherein the first CSI reporting configuration information comprises an association identifier indicating the second reporting configuration ID, and the second CSI reporting configuration information comprises an association identifier indicating the first reporting configuration ID; or
the second CSI reporting configuration information comprises an association identifier indicating the first reporting configuration ID.

6. The method according to any one of claims 1 to 3, wherein the method further comprises:
receiving second configuration information from the network device, wherein the second configuration information comprises first CSI sub-reporting configuration information and second CSI sub-reporting configuration information, and the first CSI sub-reporting configuration information and the second CSI sub-reporting configuration information are respectively used to configure the first CSI reporting and the second CSI reporting.

7. The method according to claim 6, wherein when the CSI reporting types corresponding to the first CSI reporting and the second CSI reporting are both aperiodic, an aperiodic CSI trigger state list comprises a first aperiodic CSI trigger state corresponding to the first CSI sub-reporting configuration information and a second aperiodic CSI trigger state corresponding to the second CSI sub-reporting configuration information; or

when the CSI reporting types corresponding to the first CSI reporting and the second CSI reporting are both semi-persistent, a semi-persistent CSI trigger state list comprises a first semi-persistent CSI trigger state corresponding to the first CSI sub-reporting configuration information and a second semi-persistent CSI trigger state corresponding to the second CSI sub-reporting configuration information, wherein
a third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

8. The method according to claim 6, wherein when the CSI reporting types corresponding to the first CSI reporting and the second CSI reporting are both aperiodic, an aperiodic CSI trigger state list comprises a target aperiodic CSI trigger state corresponding to the second configuration information; or

when the CSI reporting types corresponding to the first CSI reporting and the second CSI reporting are both semi-persistent, a semi-persistent CSI trigger state list comprises a target semi-persistent CSI trigger state corresponding to the second configuration information, wherein
the target aperiodic CSI trigger state and the target semi-persistent trigger state are both associated with a third reporting configuration ID, and the third reporting configuration ID is a reporting configuration ID corresponding to the second configuration information.

9. The method according to claim 8, wherein when a reporting trigger message received by the terminal device indicates to trigger the target aperiodic CSI trigger state and comprises identification information indicating the first CSI reporting, or when the reporting trigger message received by the terminal device indicates to trigger the target semi-persistent CSI trigger state and comprises the identification information indicating the first CSI reporting, the reporting trigger message is used to trigger the first CSI reporting; or
when a reporting trigger message received by the terminal device indicates to trigger the target aperiodic CSI trigger state and comprises identification information indicating the second CSI reporting, or when the reporting trigger message received by the terminal device indicates to trigger the target semi-persistent CSI trigger state and comprises the identification information indicating the second CSI reporting, the reporting trigger message is used to trigger the second CSI reporting.

10. The method according to claim 6, wherein when the reporting type of the first CSI reporting is semi-persistent and the reporting type of the second CSI reporting is aperiodic, a semi-persistent CSI trigger state list comprises a first semi-persistent CSI trigger state corresponding to the first CSI sub-reporting configuration information, and an aperiodic CSI trigger state list comprises a second aperiodic CSI trigger state corresponding to the second CSI sub-reporting configuration information; or

when the reporting type of the first CSI reporting is aperiodic and the reporting type of the second CSI reporting is semi-persistent, a semi-persistent CSI trigger state list comprises a second semi-persistent CSI trigger state corresponding to the second CSI sub-reporting configuration information, and an aperiodic CSI trigger state list comprises a first aperiodic CSI trigger state corresponding to the first CSI sub-reporting configuration information, wherein
the first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

11. The method according to any one of claims 1 to 10, wherein the method further comprises:
when a time-frequency resource of the first CSI-RS partially or completely overlaps a time-frequency resource of the second CSI-RS, determining the measurement result of the first CSI-RS as a measurement result of the second CSI-RS.

12. The method according to any one of claims 1 to 11, wherein the first CSI corresponds to one time of target first CSI reporting completed by the terminal device before a reporting moment of the second CSI, the target first CSI reporting is effective CSI reporting, the second vector set is the universal set of the first vector set, a reporting moment of the first CSI is closest to the reporting moment of the second CSI, and an interval between the reporting moments is greater than first duration.

13. The method according to any one of claims 1 to 11, wherein the first CSI corresponds to N1 consecutive times of CSI reporting completed by the terminal device before a reporting moment of the second CSI, the N1 consecutive times of CSI reporting correspond to one time of complete first CSI reporting, the second vector set is the universal set of the first vector set, the N1 times of CSI reporting are all effective CSI reporting, a CSI reporting moment corresponding to a last time of CSI reporting completed in the N1 times of CSI reporting is closest to the reporting moment of the second CSI, an interval between the reporting moments is greater than first duration, and N1 is a positive integer greater than or equal to 2.

14. The method according to any one of claims 1 to 11, wherein the first CSI corresponds to N1 consecutive times of CSI reporting of the terminal device, the N1 consecutive times of CSI reporting correspond to one time of complete first CSI reporting, the second vector set is the subset of the first vector set, indication information comprised in N2 pieces of target CSI corresponding to N2 times of target CSI reporting in the N1 times of CSI reporting further indicates the second vector set, the N2 times of target CSI reporting are all effective CSI reporting, reporting moments corresponding to the N2 times of target CSI reporting are all before a reporting moment of the second CSI, a CSI reporting moment corresponding to a last time of target CSI reporting completed in the N2 times of target CSI reporting is closest to the reporting moment of the second CSI, an interval between the reporting moments is greater than first duration, N1 is a positive integer greater than or equal to 2, and N2 is a positive integer less than N1.

15. The method according to any one of claims 12 to 14, wherein the first duration is an interval between a first moment and the reporting moment of the second CSI, and the first moment is a moment corresponding to a reference resource of the second CSI reporting corresponding to the second CSI; or
the first duration is an interval between a second moment and the reporting moment of the second CSI, the second moment is a moment corresponding to a CSI-RS corresponding to one time of second CSI reporting that is closest to a first moment, the second moment is before the first moment, and the first moment is a moment corresponding to a reference resource of the second CSI reporting corresponding to the second CSI.

16. A channel state information reporting method, wherein the method is applied to a network device, and the method comprises:

sending a first channel state information reference signal CSI-RS to a terminal device;
receiving first channel state information CSI from the terminal device, wherein the first CSI is obtained based on a measurement result of the first CSI-RS, the first CSI comprises indication information of a first vector set used to determine a target precoding matrix, and the first vector set comprises at least one of a space domain vector set and a frequency domain vector set, or comprises a space-frequency joint vector set;
sending a second CSI-RS to the terminal device; and
receiving second CSI from the terminal device, wherein the second CSI is obtained based on a measurement result of the second CSI-RS and a second vector set, the second CSI comprises a first weighting coefficient corresponding to a universal set or a subset of the second vector set, the second vector set is a universal set or a subset of the first vector set, and the first weighting coefficient and the second vector set are used to determine the target precoding matrix.

17. The method according to claim 16, wherein when CSI reporting types corresponding to first CSI reporting for reporting the first CSI and second CSI reporting for reporting the second CSI are periodic or semi-persistent, a CSI reporting periodicity corresponding to the first CSI reporting is greater than a CSI reporting periodicity corresponding to the second CSI reporting.

18. The method according to claim 16 or 17, wherein a CSI-RS corresponding to the first CSI reporting and a CSI-RS corresponding to the second CSI reporting have a same quasi-co-location relationship, or the CSI-RS corresponding to the second CSI reporting is quasi-co-located with the CSI-RS corresponding to the first CSI reporting.

19. The method according to any one of claims 16 to 18, wherein the method further comprises:
sending first configuration information to the terminal device, wherein the first configuration information comprises first CSI reporting configuration information and second CSI reporting configuration information associated with the first CSI reporting configuration information, the first CSI reporting configuration information corresponds to a first reporting configuration ID, the second reporting configuration corresponds to a second reporting configuration ID, the first reporting configuration ID is different from the second reporting configuration ID, and the first CSI reporting configuration information and the second CSI reporting configuration information are respectively used to configure the first CSI reporting and the second CSI reporting.

20. The method according to claim 19, wherein the first CSI reporting configuration information comprises an association identifier indicating the second reporting configuration ID, and the second CSI reporting configuration information comprises an association identifier indicating the first reporting configuration ID; or
the second CSI reporting configuration information comprises an association identifier indicating the first reporting configuration ID.

21. The method according to claim 19 or 20, wherein the method further comprises:
sending second configuration information to the terminal device, wherein the second configuration information comprises first CSI sub-reporting configuration information and second CSI sub-reporting configuration information, and the first CSI sub-reporting configuration information and the second CSI sub-reporting configuration information are respectively used to configure the first CSI reporting and the second CSI reporting.

22. The method according to claim 21, wherein when the CSI reporting types corresponding to the first CSI reporting and the second CSI reporting are both aperiodic, an aperiodic CSI trigger state list comprises a first aperiodic CSI trigger state corresponding to the first CSI sub-reporting configuration information and a second aperiodic CSI trigger state corresponding to the second CSI sub-reporting configuration information; or

when the CSI reporting types corresponding to the first CSI reporting and the second CSI reporting are both semi-persistent, a semi-persistent CSI trigger state list comprises a first semi-persistent CSI trigger state corresponding to the first CSI sub-reporting configuration information and a second semi-persistent CSI trigger state corresponding to the second CSI sub-reporting configuration information, wherein
a third reporting configuration ID is a reporting configuration ID corresponding to the second configuration information, and the first aperiodic CSI trigger state, the second aperiodic CSI trigger state, the first semi-persistent CSI trigger state, and the second semi-persistent CSI trigger state are all associated with the third reporting configuration ID.

23. The method according to claim 21, wherein when the CSI reporting types corresponding to the first CSI reporting and the second CSI reporting are both aperiodic, an aperiodic CSI trigger state list comprises a target aperiodic CSI trigger state corresponding to the second configuration information; or

when the CSI reporting types corresponding to the first CSI reporting and the second CSI reporting are both semi-persistent, a semi-persistent CSI trigger state list comprises a target semi-persistent CSI trigger state corresponding to the second configuration information, wherein
the target aperiodic CSI trigger state and the target semi-persistent trigger state are both associated with a third reporting configuration ID, and the third reporting configuration ID is a reporting configuration ID corresponding to the second configuration information.

24. The method according to claim 23, wherein when a reporting trigger message sent by the network device indicates to trigger the target aperiodic CSI trigger state and comprises identification information indicating the first CSI reporting, or when the reporting trigger message sent by the network device indicates to trigger the target semi-persistent CSI trigger state and comprises the identification information indicating the first CSI reporting, the reporting trigger message is used to trigger the first CSI reporting; or

when a reporting trigger message sent by the network device indicates to trigger the target aperiodic CSI trigger state and comprises identification information indicating the second CSI reporting, or when the reporting trigger message sent by the network device indicates to trigger the target semi-persistent CSI trigger state and comprises the identification information indicating the second CSI reporting, the reporting trigger message is used to trigger the second CSI reporting.

25. The method according to claim 21, wherein when the reporting type of the first CSI reporting is semi-persistent and the reporting type of the second CSI reporting is aperiodic, a semi-persistent CSI trigger state list comprises a first semi-persistent CSI trigger state corresponding to the first CSI sub-reporting configuration information, and an aperiodic CSI trigger state list comprises a second aperiodic CSI trigger state corresponding to the second CSI sub-reporting configuration information; or

when the reporting type of the first CSI reporting is aperiodic and the reporting type of the second CSI reporting is semi-persistent, a semi-persistent CSI trigger state list comprises a second semi-persistent CSI trigger state corresponding to the second CSI sub-reporting configuration information, and an aperiodic CSI trigger state list comprises a first aperiodic CSI trigger state corresponding to the first CSI sub-reporting configuration information, wherein the first semi-persistent CSI trigger state, the second semi-persistent CSI trigger state, the first aperiodic CSI trigger state, and the second aperiodic CSI trigger state are all associated with a third reporting configuration ID, and the third reporting configuration ID is a reporting configuration ID corresponding to the second configuration information.

26. The method according to any one of claims 16 to 25, wherein the first CSI corresponds to one time of target first CSI reporting completed by the terminal device before a reporting moment of the second CSI, the target first CSI reporting is effective CSI reporting, the second vector set is the universal set of the first vector set, a reporting moment of the first CSI is closest to the reporting moment of the second CSI, and an interval between the reporting moments is greater than first duration.

27. The method according to any one of claims 16 to 25, wherein the first CSI corresponds to N1 consecutive times of CSI reporting completed by the terminal device before a reporting moment of the second CSI, the N1 consecutive times of CSI reporting correspond to one time of complete first CSI reporting, the second vector set is the universal set of the first vector set, the N1 times of CSI reporting are all effective CSI reporting, a CSI reporting moment corresponding to a last time of CSI reporting completed in the N1 times of CSI reporting is closest to the reporting moment of the second CSI, an interval between the reporting moments is greater than first duration, and N1 is a positive integer greater than or equal to 2.

28. The method according to any one of claims 16 to 25, wherein the first CSI corresponds to N1 consecutive times of CSI reporting of the terminal device, the N1 consecutive times of CSI reporting correspond to one time of complete first CSI reporting, the second vector set is the subset of the first vector set, the second vector set is indicated by indication information comprised in N2 pieces of target CSI corresponding to N2 times of target CSI reporting in the N1 times of CSI reporting, the N2 times of target CSI reporting are all effective CSI reporting, reporting moments corresponding to the N2 times of target CSI reporting are all before a reporting moment of the second CSI, a CSI reporting moment corresponding to a last time of target CSI reporting completed in the N2 times of target CSI reporting is closest to the reporting moment of the second CSI, an interval between the reporting moments is greater than first duration, N1 is a positive integer greater than or equal to 2, and N2 is a positive integer less than N1.

29. The method according to any one of claims 26 to 28, wherein the first duration is an interval between a first moment and the reporting moment of the second CSI, and the first moment is a moment corresponding to a reference resource of the second CSI reporting corresponding to the second CSI; or the first duration is an interval between a second moment and the reporting moment of the second CSI, the second moment is a moment corresponding to a CSI-RS corresponding to one time of second CSI reporting that is closest to a first moment, the second moment is before the first moment, and the first moment is a moment corresponding to a reference resource of the second CSI reporting corresponding to the second CSI.

30. A communication apparatus, wherein the communication apparatus comprises a transceiver unit and a processing unit, wherein

the transceiver unit is configured to receive a first channel state information reference signal CSI-RS sent by a network device;

the processing unit is configured to trigger, based on a measurement result of the first CSI-RS, the transceiver unit to send first channel state information CSI to the network device, wherein the first CSI comprises indication information of a first vector set used to determine a target precoding matrix, and the first vector set comprises at least one of a space domain vector set and a frequency domain vector set, or comprises a space-frequency joint vector set;

the transceiver unit is further configured to receive a second CSI-RS from the network device; and

the processing unit is further configured to trigger, based on a measurement result of the second CSI-RS and a second vector set, the transceiver unit to send second CSI to the network device, wherein the second CSI comprises a first weighting coefficient corresponding to a universal set or a subset of the second vector set, the second vector set is a universal set and a subset of the first vector set, and the first weighting coefficient and the second vector set are used to determine the target precoding matrix.

31. A communication apparatus, wherein the communication apparatus comprises a transceiver unit and a processing unit, wherein

the processing unit is configured to generate a first channel state information reference signal CSI-RS;

the transceiver unit is configured to: send the first CSI-RS to a terminal device, and receive first channel state information sent by the terminal device, wherein the first CSI is obtained by the terminal device based on a measurement result of the first CSI-RS, the first CSI comprises indication information of a first vector set used to determine a target precoding matrix, and the first vector set comprises at least one of a space domain vector set and a frequency domain vector set, or comprises a space-frequency joint vector set;

the processing unit is further configured to generate a second CSI-RS; and

the transceiver unit is further configured to: send the second CSI-RS to the terminal device, and receive second CSI sent by the terminal device, wherein the second CSI is obtained by the terminal device based on a measurement result of the second CSI-RS and a second vector set, the second CSI comprises a first weighting coefficient corresponding to the second vector set or a subset of the second vector set, the second vector set is the first vector set or a subset of the first vector set, and the first weighting coefficient and the second vector set are used to determine the target precoding matrix.

32. A computer-readable storage medium, wherein the computer-readable storage medium stores a computer program, and when the computer program is run, the channel state information reporting method according to any one of claims 1 to 15 or the channel state information reporting method according to any one of claims 16 to 29 is implemented.

33. A chip, comprising a processor and an interface, wherein

the processor is configured to read instructions to perform the channel state information reporting method according to any one of claims 1 to 15, or the channel state information reporting method according to any one of claims 16 to 29.

34. A computer program product, wherein the computer program product is run on a computer to perform the channel state information reporting method according to any one of claims 1 to 15, or the channel state information reporting method according to any one of claims 16 to 29.

35. A communication apparatus, comprising at least one processor and a memory, wherein

the memory is configured to store a computer program; and

the processor is configured to execute the computer program stored in the memory, to cause the communication apparatus to perform the channel state information reporting method according to any one of claims 1 to 15, or the channel state information reporting method according to any one of claims 16 to 29.

Network
device 110

Terminal
device 120

Terminal
device 130

Terminal
device 140

Terminal
device 150

Terminal
device 160

Terminal
device 170

FIG. 1

Network
device 210

Network
device 220

Network
device 230

Terminal
device 240

Terminal
device 250

Terminal
device 260

FIG. 2

Network
device

Terminal
device

S310: Send channel measurement
configuration information

S320: Send a channel
measurement pilot

S330: Feed back CSI

S340: Send data

FIG. 3

Network device

Terminal device

S410: First CSI-RS

S411: Determine, based on a measurement result of the first CSI-RS, first channel state information CSI including indication information of a first vector set

S412: First CSI

S413: Second CSI-RS

S414: Determine second CSI based on a measurement result of the second CSI-RS and a second vector set

S415: Second CSI

FIG. 4

One time of complete first CSI reporting

N1 times of first CSI sub-reporting

One time of second CSI reporting

...

Time/t

Second CSI

First CSI

FIG. 5

First CSI
reporting A3

First CSI
reporting A2

First CSI
reporting A1

One time of second
CSI reporting

Second CSI

...

First CSI

Time/t

First preset
duration

dt1

t2                                        t1

FIG. 6

First CSI
reporting E2

First CSI
reporting E1

One time of
second CSI
reporting

N1 times of first CSI
sub-reporting

N1 times of first CSI
sub-reporting

Second
CSI

...                        ...

Time/t

First CSI

First preset
duration

dt2

t3                                                              t1

FIG. 7

FIG. 8

```
┌──────────┐                                          ┌──────────┐
│ Network  │                                          │ Terminal │
│ device   │                                          │ device   │
└──────────┘                                          └──────────┘
```

S416: First configuration information or
second configuration information

S410: First CSI-RS

S411: Determine, based on a measurement
result of the first CSI-RS, first channel
state information CSI including indication
information of a first vector set

S412: First CSI

S413: Second CSI-RS

S414: Determine second CSI based on a
measurement result of the second CSI-RS
and a second vector set

S415: Second CSI

FIG. 9

FIG. 10

111

Antenna

Radio frequency unit

Board

Memory — Processor

112

FIG. 11

Communication
apparatus 120

121

Processor

124

123

Bus system

Transceiver

122

Memory

FIG. 12

## INTERNATIONAL SEARCH REPORT

| International application No. |
| --- |
| **PCT/CN2024/114045** |

| A. | CLASSIFICATION OF SUBJECT MATTER |
| --- | --- |

H04B 7/06(2006.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP: 信道状态信息参考信号, 信道状态信息, 第一, 第二, 上报, 反馈, 预编码, 向量, 加权系数, CSI-RS, CSI, first, second, report, feedback, precode, vector, weighting coefficient

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111585627 A (SHANGHAI LANGBO COMMUNICATION TECHNOLOGY CO., LTD.) 25 August 2020 (2020-08-25) description, paragraphs 11-169 | 1, 3, 11-16, 18, 26-35 |
| Y | CN 111585627 A (SHANGHAI LANGBO COMMUNICATION TECHNOLOGY CO., LTD.) 25 August 2020 (2020-08-25) description, paragraphs 11-169 | 2, 4-10, 17, 19-25 |
| Y | CN 115529069 A (HUAWEI TECHNOLOGIES CO., LTD.) 27 December 2022 (2022-12-27) description, paragraphs 5-12 | 2, 17 |
| Y | CN 116193600 A (HUAWEI TECHNOLOGIES CO., LTD.) 30 May 2023 (2023-05-30) description, paragraphs 89-168 | 4-10, 19-25 |
| A | CN 111356171 A (HUAWEI TECHNOLOGIES CO., LTD.) 30 June 2020 (2020-06-30) entire document | 1-35 |
| A | CN 116032416 A (WEIWO SOFTWARE TECHNOLOGY CO., LTD.) 28 April 2023 (2023-04-28) entire document | 1-35 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2024** | **14 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/114045** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2020135573 A1 (ZTE CORP.) 02 July 2020 (2020-07-02) entire document | 1-35 |

## INTERNATIONAL SEARCH REPORT
### Information on patent family members

International application No.

**PCT/CN2024/114045**

| Patent document cited in search report | | | Publication date (day/month/year) | Patent family member(s) | | | Publication date (day/month/year) |
|---|---|---|---|---|---|---|---|
| CN | 111585627 | A | 25 August 2020 | None | | | |
| CN | 115529069 | A | 27 December 2022 | WO | 2022267899 | A1 | 29 December 2022 |
| CN | 116193600 | A | 30 May 2023 | WO | 2023093352 | A1 | 01 June 2023 |
| | | | | EP | 4340505 | A1 | 20 March 2024 |
| CN | 111356171 | A | 30 June 2020 | WO | 2020125422 | A1 | 25 June 2020 |
| | | | | EP | 3886485 | A1 | 29 September 2021 |
| | | | | EP | 3886485 | A4 | 19 January 2022 |
| | | | | US | 2021314122 | A1 | 07 October 2021 |
| CN | 116032416 | A | 28 April 2023 | None | | | |
| WO | 2020135573 | A1 | 02 July 2020 | CN | 110535498 | A | 03 December 2019 |
| | | | | CN | 110535498 | B | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311133878